(19) Europäisches Patentamt
European Patent Office
Office européen des brevets

(11) EP 4 502 678 A1

(12) **EUROPEAN PATENT APPLICATION**
published in accordance with Art. 153(4) EPC

(43) Date of publication:
**05.02.2025 Bulletin 2025/06**

(21) Application number: **23779979.6**

(22) Date of filing: **22.03.2023**

(51) International Patent Classification (IPC):
***G02B 5/30*** *(2006.01)* ***B32B 7/023*** *(2019.01)*
***B42D 25/364*** *(2014.01)*

(52) Cooperative Patent Classification (CPC):
**B32B 7/023; B42D 25/364; G02B 5/30**

(86) International application number:
**PCT/JP2023/011304**

(87) International publication number:
**WO 2023/189967 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057409**

(71) Applicant: **Zeon Corporation**
**Tokyo 100-8246 (JP)**

(72) Inventor: **FUJINO, Yasuhide**
**Tokyo 100-8246 (JP)**

(74) Representative: **Maiwald GmbH**
**Elisenhof**
**Elisenstraße 3**
**80335 München (DE)**

(54) **IDENTIFICATION MEDIUM**

(57) An identification medium including: a first layer; and a second layer disposed overlapping with the first layer, wherein: the first layer is a layer capable of reflecting one of clockwise and counterclockwise circularly polarized light and of allowing transmission of the other light, and includes a layer of a resin having cholesteric regularity; the second layer is a layer capable of reflecting at least a portion of circularly polarized light rotating in a same direction as that of the circularly polarized light that is reflected by the first layer and allowing transmission of the circularly polarized light rotating in a direction opposite to that of the circularly polarized light that is reflected by the first layer, and is a layer containing flakes of a resin having cholesteric regularity; and a volume-average particle diameter (D50) of the flakes in the second layer is >70 μm.

FIG.2

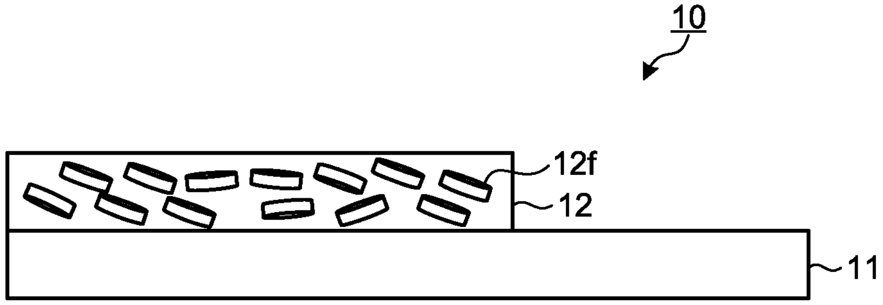


EP 4 502 678 A1

## Description

### Field

The present invention relates to an identification medium.

### Background

It is a general practice to furnish an article with an identification medium which cannot be easily reproduced for determination whether or not the article is an authentic product supplied from a registered manufacturer. As such an identification medium, those formed from a material having a circularly polarized light separation function have been known.

A material having a circularly polarized light separation function has a function of transmitting one of clockwise circularly polarized light and counterclockwise circularly polarized light, and of reflecting a portion of or all of the other circularly polarized light. An image appearing when the identification medium formed using this material is observed through a clockwise circular polarizing plate differs from an image appearing when the identification medium is observed through a counterclockwise circular polarizing plate. Therefore, in the determination of authenticity of an article including such an identification medium, a viewer equipped with two circular polarizing plates: a clockwise circular polarizing plate and a counterclockwise circular polarizing plate is generally used.

The determination of authenticity using a prior-art identification medium requires a viewer equipped with two circularly polarizing plates as described above, and therefore requires a high cost. Furthermore, since it is difficult for general users to acquire the viewer, it is difficult for the general users to perform a determination of authenticity, and the determination of authenticity is performed only by an original manufacturer, a certain retail store, a public institution, or the like. Accordingly, there has been a need for an identification medium with which general users can determine authenticity without using such a special viewer.

In response to the need, the present inventor has developed an identification medium that includes: a first layer that is capable of reflecting one type of circularly polarized light and of allowing transmission of the other type of circularly polarized light; and a second layer that is capable of reflecting circularly polarized light rotating in the same direction as the rotation direction of the circularly polarized light that is reflected by the first layer, and of allowing transmission of the circularly polarized light rotating in the direction opposite to the rotation direction of the circularly polarized light that is reflected by the first layer, and that is disposed in a manner of overlapping with the first layer. Here, the identification medium allows for determination of authenticity with the naked eye when the reflectance of the first layer and the reflectance of the second layer satisfy a specific relationship (Patent Literature 1).

### Citation List

#### Patent Literature

Patent Literature 1: International Publication No. 2020/004155 (corresponding publication: U.S. patent application publication No. 2021/300105)

### Summary

#### Technical Problem

With regard to the observation of the ideal identification medium including the aforementioned first and second layers, the second layer is observed only during observation of the identification medium from the second layer side, and the second layer is not observed during observation of the identification medium from a side opposite to the second layer side (the first layer side), nevertheless the identification medium is translucent and the other surface side thereof is seen through one surface side. However, the present inventor has carried out further development, and found that when the identification medium is carefully observed from the first layer side, the second layer may be seen through the first layer of the identification medium.

The present invention has been made in view of the above-mentioned problems, and an object of the present invention is to provide an identification medium that allows for determination of authenticity without using a special viewer and that has favorable visibility of front and back surfaces.

Solution to Problem

The present inventor has intensively studied for solving the problems. As a result, the present inventor found out that, by employing as the second layer a layer containing flakes of a resin having cholesteric regularity and setting the volume-average particle diameter of the flakes to equal to or more than a specific value, visual recognition of the second layer upon observation of the identification medium from the first layer side is reduced, and visibility of front and back surfaces of the identification medium can be made favorable. The present invention has thereby completed. That is the present invention is as follows.

(1) An identification medium comprising: a first layer; and a second layer disposed thereon in a manner of overlapping with the first layer, wherein:

the first layer is a layer capable of reflecting one of clockwise circularly polarized light and counterclockwise circularly polarized light and of allowing transmission of the other circularly polarized light, and includes a layer of a resin having cholesteric regularity;
the second layer is a layer capable of reflecting at least a portion of circularly polarized light rotating in a same direction as a rotation direction of the circularly polarized light that is reflected by the first layer and of allowing transmission of the circularly polarized light rotating in a direction opposite to the rotation direction of the circularly polarized light that is reflected by the first layer, and is a layer containing flakes of a resin having cholesteric regularity; and
a volume-average particle diameter (D50) of the flakes contained in the second layer is 70 $\mu$m or more.

(2) The identification medium according to (1), comprising a third layer disposed on a surface of the first layer opposite to a surface on which the second layer is disposed in a manner of overlapping with the first layer, wherein

the third layer is a layer capable of allowing transmission of circularly polarized light rotating in a direction opposite to the rotation direction of the circularly polarized light that is reflected by the first layer, and is a layer containing flakes of a resin having cholesteric regularity, and
a volume-average particle diameter (D50) of the flakes contained in the third layer is 70 $\mu$m or more.

(3) The identification medium according to (1) or (2), wherein a ratio of an area of one bottom surface relative to an area of a side surface (bottom surface area / side surface area) of the flakes having cholesteric regularity is 1.5 or more.
(4) The identification medium according to any one of (1) to (3), wherein a ratio of an area of a flake group per unit area of the layer containing the flakes of the resin having cholesteric regularity is less than 60%.
(5) The identification medium according to any one of (1) to (4), wherein the layer containing the flakes of the resin having cholesteric regularity contains a binder, and an absolute value of a difference between an average refractive index of the flake and a refractive index of the binder is 0.2 or less.
(6) The identification medium according to (5), comprising a fourth layer that covers the second layer, wherein the second layer contains the binder, and an absolute value of a difference between a refractive index of the binder contained in the second layer and a refractive index of the fourth layer is 0.2 or less.
(7) The identification medium according to (5), comprising a third layer disposed on a surface of the first layer opposite to a surface on which the second layer is disposed thereon in a manner of overlapping with the first layer, wherein

the third layer is a layer capable of allowing transmission of circularly polarized light rotating in a direction opposite to the rotation direction of circularly polarized light that is reflected by the first layer, and is a layer containing flakes of a resin having cholesteric regularity,
a volume-average particle diameter (D50) of the flakes contained in the third layer is 70 $\mu$m or more,
the identification medium comprises a fourth layer that covers the third layer, and the third layer contains the binder, and an absolute value of a difference between a refractive index of the binder contained in the third layer and a refractive index of the fourth layer is 0.2 or less.

(8) The identification medium according to (6) or (7), comprising a substrate layer provided on a surface of the fourth layer opposite to a surface on the first layer side, a haze of the substrate layer being 1.0% or less.

Advantageous Effects of Invention

The present invention can provide an identification medium that allows for determination of authenticity without using a viewer equipped with a clockwise circularly polarizing plate and a counterclockwise circularly polarizing plate and

has favorable visibility of front and back surfaces.

Brief Description of Drawings

FIG. 1 is a plan view schematically illustrating an identification medium according to Embodiment 1 of the present invention.
FIG. 2 is a cross-sectional view schematically illustrating a cross section in an X1-X1 direction of FIG. 1.
FIG. 3 is an exploded cross-sectional view schematically illustrating a path of light when light enters from a second layer side of the identification medium.
FIG. 4 is an exploded cross-sectional view schematically illustrating a path of light when light enters from a first layer side of the identification medium.
FIG. 5 is a perspective view schematically illustrating a flake and a path of light that enters the flake.
FIG. 6 is a cross-sectional view schematically illustrating an example in which the identification medium according to Embodiment 1 includes an optional configuration.
FIG. 7 is an exploded perspective view schematically illustrating an identification medium according to Embodiment 2 of the present invention.
FIG. 8 is a schematic plan view of the identification medium of FIG. 7 seen from a second layer side.
FIG. 9 is a schematic plan view of the identification medium of FIG. 7 seen from a third layer side.
FIG. 10 is a cross-sectional view schematically illustrating a cross section in an X2-X2 direction of FIGs. 8 and 9.
FIG. 11 is an exploded cross-sectional view schematically illustrating a path of light when light enters from the second layer side of the identification medium.
FIG. 12 is an exploded cross-sectional view schematically illustrating a path of light when light enters from the third layer side of the identification medium.
FIG. 13 is a cross-sectional view schematically illustrating an example in which the identification medium according to Embodiment 2 includes an optional configuration.
FIG. 14 is a cross-sectional view schematically illustrating an example in which the identification medium according to Embodiment 2 includes an optional configuration.
FIG. 15 is a cross-sectional view schematically illustrating a method for reflection observation I of identification mediums in Examples and Comparative Examples.
FIG. 16 is a cross-sectional view schematically illustrating a method for reflection observation II of the identification mediums in Examples and Comparative Examples.
FIG. 17 is a cross-sectional view schematically illustrating a method for transmission observation of the identification mediums in Examples and Comparative Examples.
FIG. 18 is a side view schematically illustrating an apparatus for producing a peel piece used during the production of a peel piece (flake) of a cholesteric resin layer in Examples.

Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents.
In the following description, a term "pattern" refers to a planar shape of an object, unless otherwise specified. Examples of the pattern may include a letter, a numeral, and a figure.
In the following description, a term "visible light region" refers to a wavelength range of 400 nm or more and 780 nm or less.
In the following description, an in-plane retardation of a film or a layer is a value represented by $(nx - ny) \times d$. Furthermore, a retardation of a film or a layer in a thickness direction thereof is a value represented by $\{(nx + ny)/2 - nz\} \times d$. Herein, nx represents a refractive index in a direction in which the maximum refractive index is given among directions perpendicular to the thickness direction of the film or layer (in-plane directions), ny represents a refractive index in a direction, among the above-mentioned in-plane directions of the film or layer, perpendicular to the direction giving nx, nz represents a refractive index in the thickness direction of the film or layer, and d represents the thickness of the film or layer. These retardations may be measured with a commercially available phase difference measuring device (for example, "WPA-micro" manufactured by Photonic Lattice, Inc.) or the Senarmont method at a wavelength of 560 nm.
In the following description, the term "(meth)acryl" is a term that encompasses acryl, methacryl, and a combination of these. The term "(meth)acrylate" is a term that encompasses acrylate, methacrylate, and a combination

of these. The term "(thio)epoxy" is a term that encompasses epoxy, thioepoxy, and a combination of these. The term "iso(thio)cyanate" is a term that encompasses isocyanate, isothiocyanate, and a combination of these.

[Embodiment 1]

Hereinafter, an identification medium according to Embodiment 1 of the present invention will be described with reference to FIGs. 1 to 6.

FIG. 1 is a plan view schematically illustrating the identification medium according to Embodiment 1 of the present invention. FIG. 2 is a cross-sectional view schematically illustrating a cross section in an X1-X1 direction of FIG. 1. FIG. 3 is an exploded cross-sectional view schematically illustrating a path of light when light enters from a second layer side of the identification medium. FIG. 4 is an exploded cross-sectional view schematically illustrating a path of light when light enters from a first layer side of the identification medium. FIG. 5 is a perspective view schematically illustrating a flake and a path of light that enters the flake. FIG. 6 is a cross-sectional view schematically illustrating an example in which the identification medium according to Embodiment 1 includes an optional configuration.

(Summary of identification medium)

As shown in FIGs. 1 and 2, an identification medium 10 according to Embodiment 1 of the present invention includes a first layer 11 and a second layer 12 disposed thereon in a manner of overlapping with the first layer 11. In this application, a certain layer "overlapping" with another layer means that layers are at least partially at the same planar position when the planar positional relationship of the layers is observed in the thickness direction of the identification medium.

The first layer 11 is a layer capable of reflecting one of clockwise circularly polarized light and counterclockwise circularly polarized light and of allowing transmission of the other circularly polarized light. The first layer 11 is a layer of a resin having cholesteric regularity. The second layer 12 is a layer capable of reflecting at least a portion of circularly polarized light rotating in the same direction as the rotation direction of the circularly polarized light that is reflected by the first layer 11 and of allowing transmission of the circularly polarized light rotating in the direction opposite to the rotation direction of the circularly polarized light that is reflected by the first layer 11. The second layer 12 is a layer containing flakes 12f of a resin having cholesteric regularity. In the present embodiment, the volume-average particle diameter (D50) of the flakes 12f contained in the second layer 12 is equal to or more than a specific value. In FIG. 1, the second layer 12 is a portion of a character pattern of "ABCD" that is formed directly on one surface of the first layer 11. The second layer 12 is formed at a position where the entirety of the second layer 12 completely overlaps with the first layer 11.

FIG. 2 is a schematic view, and therefore the cross-sectional shape of the second layer 12 is schematically shown. Specifically, as the second layer 12, FIG. 2 shows a schematic cross-sectional shape of a layer that has a planar shape with a character pattern and a certain thickness.

The method of use of the identification medium according to the present embodiment will be described by using the drawings. FIG. 3 is an exploded cross-sectional view schematically illustrating a path of light when light enters from the second layer 12 side of the identification medium. FIG. 4 is an exploded cross-sectional view schematically illustrating a path of light when light enters from the first layer 11 side of the identification medium. FIGs. 3 and 4 illustrate as an example a case where the first layer 11 is a layer capable of reflecting clockwise circularly polarized light and of allowing transmission of counterclockwise circularly polarized light, the second layer 12 is a layer capable of reflecting at least a portion of the clockwise circularly polarized light and of allowing transmission of the counterclockwise circularly polarized light, that is, a layer that does not reflect or hardly reflects the counterclockwise circularly polarized light.

When non-polarized light A1 such as natural light enters from the second layer 12 side of the identification medium as shown in FIG. 3, at least a portion of clockwise circularly polarized light A1R of the non-polarized light A1 is reflected by the flakes of the second layer 12. The flakes contained in the second layer 12 are usually dispersed in the layer with the flakes being oriented in various directions, and therefore the circularly polarized light A1R is visually recognized as backscattering light A2R. On the other hand, of the non-polarized light A1, counterclockwise circularly polarized light A1L is transmitted through the second layer 12, and the counterclockwise circularly polarized light A1L that has been transmitted through the second layer 12 is transmitted through the first layer 11.

When the first layer 11 on which the second layer 12 is not disposed is irradiated with the non-polarized light A1 from the second layer 12 side, the clockwise circularly polarized light A1R of the non-polarized light A1 is specularly reflected by the first layer 11, and becomes reflected light A3R. On the other hand, of the non-polarized light A1, the counterclockwise circularly polarized light A1L is transmitted through the first layer 11.

Subsequently, when the non-polarized light A1 enters from the first layer 11 side as shown in FIG. 4, the clockwise circularly polarized light A1R of the non-polarized light A1 is specularly reflected by the first layer 11, and becomes reflected light A3R. On the other hand, of the non-polarized light A1, the counterclockwise circularly polarized light A1L is transmitted through the first layer 11. At a region where the second layer 12 is disposed on the first layer 11, the

counterclockwise circularly polarized light A1L that has been transmitted through the first layer 11 is transmitted through the second layer 12.

Therefore, when the identification medium is observed from the second layer 12 side, entering of the non-polarized light A1 from the second layer 12 side results in visual recognition of the backscattering light A2R at the region where the second layer 12 of the identification medium is disposed, and visual recognition of the reflected light A3R that is generated by specular reflection from the first layer 11 at the region where the second layer 12 is not disposed. Accordingly, an observer can visually recognize information of the second layer 12 from a difference between the backscattering light A2R and the reflected light A3R. When the non-polarized light A1 enters from the first layer 11 side, the amount of the counterclockwise circularly polarized light A1L transmitted at the region where the second layer 12 is disposed is at the same level as that at the region where the second layer 12 is not disposed in the identification medium. Therefore, when the identification medium is observed from the second layer side, the transmitted light A1L from the first layer side does not influence the visibility of the information of the second layer 12, or even if it influences the visibility, the influence can be at a very low level decreased to a minimal amount.

On the other hand, when the identification medium is observed from the first layer 11 side, the reflected light A3R is visually recognized on the entire surface of the first layer 11 by the irradiation with the non-polarized light A1 from the first layer 11 side. When the non-polarized light A1 enters from the second layer 12 side, the amount of the counterclockwise circularly polarized light A1L transmitted at the region where the second layer 12 is disposed is at the same level as that at the region 12 where the second layer is not disposed in the identification medium. Therefore, when the identification medium is observed from the first layer 11 side, the amounts of the reflected light A3R from the first layer 11 and the transmitted light A1L from the second layer 12 side that are observed on the entire surface of the first layer 11 can be made at the same level regardless of whether a region has the second layer 12 disposed or not. Accordingly, the information of the second layer 12 can be prevented from being visually recognized.

Since the volume-average particle diameter (D50) of the flakes contained in the second layer is equal to or more than a specific value, according to the present embodiment, the identification medium allows for determination of authenticity without using a special viewer and has favorable visibility of front and back surfaces.

The present inventor has carried out further development of the identification medium, which has already been developed, including a first layer and a second layer, and found that during observation of the identification medium from the first layer side, the second layer can be seen through the first layer by careful observation. The present inventor has further investigated, and found that when the volume-average particle diameter of the flakes is equal to or more than the specific value, visual recognition of the second layer when the identification medium is observed from the first layer side can be reduced, and the visibility of front and back surfaces of the identification medium can be improved. The present inventor deduces that the mechanism in which the visibility of the identification medium can be improved is as follows. However, the technical scope of the present invention is not restricted by the mechanism described below.

FIG. 5 is a perspective view schematically illustrating a flake and a path of light that enters the flake. As shown in FIG. 5, each of the flakes 12f contained in the second layer usually has bottom surfaces (upper surface t and lower surface u) and a side surface s. With regard to such a flake 12f, of non-polarized light A1 entering one bottom surface (upper surface t), at least a portion of one type of circularly polarized light (for example, clockwise circularly polarized light A1R) is reflected on the surface and inside of the flake 12f, and emitted from the upper surface u, and the other type of circularly polarized light (for example, counterclockwise circularly polarized light A1L) is transmitted and emitted from the other bottom surface (lower surface u). On the other hand, a portion of the non-polarized light A1 entering the side surface s of the flake 12f is reflected by interface reflection between the flake 12f and an outside thereof as non-polarized and reflected light A4. Furthermore, non-polarized light A1 entering the inside of the flake 12f from the side surface s of the flake 12f is emitted from the lower surface u of the flake as emitted light A5 having a reduced degree of polarization. The first layer is capable of allowing transmission of one type of circularly polarized light in a rotating direction opposite to the direction of the other type of circularly polarized light that can be reflected by the second layer. In the case of observation of this identification medium from the first layer side, in the region where the second layer is disposed and in the vicinity of that region, the aforementioned one type of circularly polarized light of the non-polarized and reflected light A4, and, if the emitted light A5 is almost non-polarized, the aforementioned one type of circularly polarized light in that non-polarized light might be transmitted through the first layer. The transmission of such type of light might be visually recognized by the observer. Consequently, the information of the second layer might be seen through the first layer.

On the other hand, since in the first embodiment, the volume-average particle diameter (D50) of the flakes contained in the second layer is equal to or more than a specific value, the area of one bottom surface of the flakes can be made relatively large, and the area of the side surface of the flakes can be made relatively small. As a result, a reduction in the degree of polarization of the emitted light by the interface reflection of non-polarized light from the side surface of the flakes and incidence of non-polarized light from the side surface of the flaks can be suppressed. This can reduce see-through recognition of the information of the second layer during observation of the identification medium from the first layer side.

Respective configurations of the identification medium according to the present embodiment and properties of

the identification medium will be described.

(First layer)

The first layer is a layer capable of reflecting one of clockwise circularly polarized light and counterclockwise circularly polarized light and of allowing transmission of the other circularly polarized light. As the first layer, a layer of a resin having cholesteric regularity (hereinafter also referred to as a "cholesteric resin layer") may be adopted. The cholesteric regularity possessed by the resin layer having cholesteric regularity is a structure in which the angles of molecular axes in stacking planes are shifted (twisted) as the planes are observed sequentially passing through the stacked planes, such that molecular axes in a first plane are oriented in a certain direction, molecular axes in a subsequent plain stacking on the first plane are oriented in a direction shifted by a small angle with respect to that of the first plane, and molecular axes in still another plane are oriented in a direction of a further shifted angle. That is, in a case where molecules in the layer have the cholesteric regularity, the molecules are aligned in a manner in which many molecular layers are formed in the resin layer. In a certain layer A among such multiple molecular layers, molecules are aligned in such a manner that axes of the molecules are directed in a certain direction. In the neighboring layer B, molecules are aligned in a direction that is shifted to form an angle with the direction in the layer A. In the further neighboring layer C, molecules are aligned in a direction that is further shifted to form an angle with the direction in the layer B. Thus, in the multiple molecular layers, the angles of the axes of the molecules are continuously shifted to form a structure in which molecules are twisted. The structure in which the directions of the molecular axes are twisted as described above serves as an optically chiral structure.
The cholesteric resin layer usually has a circularly polarized light separation function. That is, the cholesteric resin layer has a property of allowing transmission of one circularly polarized light of the clockwise circularly polarized light and the counterclockwise circularly polarized light and reflecting a portion or all of the other type of circularly polarized light. The cholesteric resin layer reflects circularly polarized light while maintaining its chirality.
The wavelength for which the circularly polarized light separation function is exerted depends on the pitch of the helical structure in the cholesteric resin layer. The pitch of the helical structure is the distance in the plane normal direction in the helical structure from an original plane to another plane in which the angle of the direction of the molecular axis that has been gradually and continuously shifted as proceeding through the planes from the original plane returns to the original molecular axis direction again. By changing the size of the pitch of the helical structure, it is possible to change the wavelength for which the circularly polarized light separation function is exerted.
The cholesteric resin layer may be obtained by, for example, providing a film of a cholesteric liquid crystal composition on a supporting body that is suitable for forming a resin layer and curing the film of the cholesteric liquid crystal composition. The obtained layer may be used as a cholesteric resin layer as it is. The cholesteric resin layer is a layer made of a film of a material itself that is capable of reflecting one of clockwise circularly polarized light and counterclockwise circularly polarized light and that allows transmission of the other circularly polarized light. Thus, the cholesteric resin layer itself may be used as the first layer.
As the cholesteric liquid crystal composition for forming the cholesteric resin layer, for example, a composition containing a liquid crystal compound and capable of exhibiting a cholesteric liquid crystal phase when the composition is made in a form of a film on a supporting body may be used. Herein, as the liquid crystal compound, a liquid crystal compound that is a polymer compound and a polymerizable liquid crystal compound may be used. In order to obtain high thermal stability, a polymerizable liquid crystal compound is preferably used. By polymerizing such a polymerizable liquid crystal compound in a state of exhibiting the cholesteric regularity, a film of the cholesteric liquid crystal composition may be cured, and as a result, a non-liquid crystal resin layer that is cured while exhibiting the cholesteric regularity may be obtained.
Examples of suitable cholesteric resin layers having a high reflectance in the wavelength region of 420 nm to 650 nm may include (i) a cholesteric resin layer in which the size of the pitch of the helical structure is changed stepwise, and (ii) a cholesteric resin layer in which the size of the pitch of the helical structure is continuously changed.

(i) The cholesteric resin layer in which the pitch of the helical structure is changed stepwise may be obtained by forming a plurality of cholesteric resin layers having different pitches of the helical structure. As a specific example, such a cholesteric resin layer may be produced by preparing a plurality of cholesteric resin layers having different pitches of the helical structure in advance, and then fixing each of the cholesteric resin layers via a tackiness agent or an adhesive. Alternatively, such a cholesteric resin layer may be produced by forming a cholesteric resin layer, and sequentially forming other cholesteric resin layers thereon.

(ii) The cholesteric resin layer in which the size of the pitch of the helical structure is continuously changed is not particularly limited by the production method. A preferable example of the method for producing such a cholesteric resin layer is a method in which a cholesteric liquid crystal composition that contains a polymerizable liquid crystal compound for forming a cholesteric resin layer is applied, preferably, on another layer such as an orientation film to obtain a layer of the liquid crystal composition. In this method, the layer is then cured by light irradiation and/or warming

treatment performed one or more times in a state in which the pitch of the helical structure is continuously changed. Such an operation is an operation of expanding the reflection band of the cholesteric resin layer, and is thus referred to as a broadband treatment. By performing the broadband treatment, even a cholesteric resin layer having a thickness as thin as, for example, 5 μm or less can achieve a wide reflection band, which is preferable.

As a preferable embodiment of the cholesteric liquid crystal composition to be subjected to the broadband treatment, a cholesteric liquid crystal composition (X) described in detail below may be mentioned.

As the cholesteric resin layer in which the size of the pitch of the helical structure is continuously changed, one layer may be solely used, and a plurality of layers may be used in a stacked manner. For example, as the first resin layer, a combination of cholesteric layers may be used, including a cholesteric resin layer that exhibits a circularly polarized light separation function in a partial region of the visible light region and a cholesteric resin layer that exhibits a circularly polarized light separation function in another region, to exhibit a circularly polarized light separation function in a wide region of the visible light region.

As described above, the cholesteric resin layer may be a resin layer composed of only one layer or a resin layer composed of two or more layers. When two or more layers are provided, the cholesteric resin layer may include two or more cholesteric resin layers of the above-mentioned (i), two or more cholesteric resin layers of the above-mentioned (ii), or two or more layers of a combination of both of them. The number of layers constituting the cholesteric resin layer is preferably 1 layer to 100 layers, and more preferably 1 layer to 20 layers, from the viewpoint of facilitating its production. If a cholesteric resin layer having a high reflectance is obtained with only a single layer as a result of the aforementioned broadband treatment, the identification medium of the preferable embodiment may be obtained by using only this one single layer.

The cholesteric liquid crystal composition (X) contains a compound represented by the following formula (1) and a specific rod-like liquid crystal compound. As each of the compound represented by the formula (1) and the rod-like liquid crystal compound, one type of the compound may be solely used. Alternatively, two or more types of the compounds may be used in combination at any ratio.

Each of these components will be described in the following.

$$R^1\text{-}A^1\text{-}B\text{-}A^2\text{-}R^2 \qquad (1)$$

In the formula (1), $R^1$ and $R^2$ are each independently a group selected from the group consisting of a linear or branched alkyl group of 1 to 20 carbon atoms, a linear or branched alkylene oxide group of 1 to 20 carbon atoms, a hydrogen atom, a halogen atom, a hydroxyl group, a carboxyl group, a (meta)acrylic group, an epoxy group, a mercapto group, an isocyanate group, an amino group, and a cyano group.

The alkyl group and the alkylene oxide group may be unsubstituted or substituted with one or more halogen atoms. In addition, the halogen atom, hydroxyl group, carboxyl group, (meta)acrylic group, epoxy group, mercapto group, isocyanate group, amino group, and cyano group may be bonded to a C1-C2 alkyl group and alkylene oxide group.

Preferable examples of $R^1$ and $R^2$ may include a halogen atom, a hydroxyl group, a carboxyl group, a (meth) acrylic group, an epoxy group, a mercapto group, an isocyanate group, an amino group, and a cyano group.

It is preferable that one or more of $R^1$ and $R^2$ are a reactive group. When the compound represented by the above-mentioned formula (1) has a reactive group as at least one of $R^1$ and $R^2$, the compound is fixed in the cholesteric resin layer at the time of curing, so that a stronger layer can be formed. Herein, examples of the reactive group may include a carboxyl group, a (meth)acrylic group, an epoxy group, a mercapto group, an isocyanate group, and an amino group.

In the formula (1), $A^1$ and $A^2$ each independently represent a group selected from the group consisting of a 1,4-phenylene group, a 1,4-cyclohexylene group, a 1,4-cyclohexenylene group, a 4,4'-biphenylene group, a 4,4'-bicyclohexylene group, and a 2,6-naphthylene group. The 1,4-phenylene group, 1,4-cyclohexylene group, 1,4-cyclohexenylene group, 4,4'-biphenylene group, 4,4'-bicyclohexylene group, and 2,6-naphthylene group are not substituted or may be substituted with one or more substituents such as a halogen atom, a hydroxyl group, a carboxyl group, a cyano group, an amino group, and a C1-10 alkyl group and halogenated alkyl group. When two or more substituents are present in each of $A^1$ and $A^2$, they may be the same as, or different from, each other.

Particularly preferable examples of $A^1$ and $A^2$ may include groups selected from the group consisting of a 1,4-phenylene group, a 4,4'-biphenylene group, and a 2,6-naphthylene group. These aromatic ring skeletons are relatively rigid compared to alicyclic skeletons, and the affinity of the groups to mesogens of the rod-like liquid crystal compound is high and the orientation uniformity becomes much higher.

In the formula (1), B is selected from the group consisting of a single bond, -O-, -S-, -S-S-, -CO-, -CS-, - OCO-, $-CH_2-$, $-OCH_2-$, -CH=N-N=CH-, -NHCO-, -OCOO-, $-CH_2COO-$, and $-CH_2OCO-$.

Particularly preferable examples of B may include a single bond, -OCO-, and -CH=N-N=CH-.

At least one of the compounds of the formula (1) preferably has liquid crystal properties and preferably has chirality. It is preferable that the cholesteric liquid crystal composition (X) contains a mixture of a plurality of optical isomers as the compounds of the formula (1). For example, the cholesteric liquid crystal composition (X) may contain a mixture of a

plurality of types of enantiomers and/or diastereomers. It is preferable that at least one of the compounds of the formula (1) has a melting point in the range of 50°C to 150°C.

When the compound of the formula (1) has liquid crystal properties, it is preferable that Δn is high. By using a liquid crystal compound with high Δn as the compound of the formula (1), Δn of the cholesteric liquid crystal composition (X) can be improved, and a cholesteric resin layer capable of reflecting circularly polarized light in a wide wavelength range can be produced. Δn of at least one of the compounds of the formula (1) is preferably 0.18 or more, and more preferably 0.22 or more. The upper limit of Δn may be set to, for example, 0.50.

Particularly preferable specific examples of the compound of the formula (1) may include the following compounds (A1) to (A10):

[Chemical formula 1]

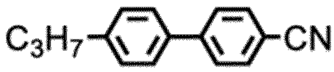
(A1)

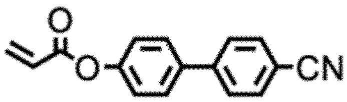
(A2)

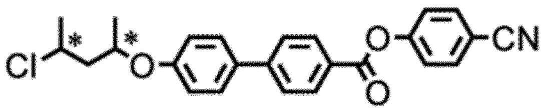
(A3)

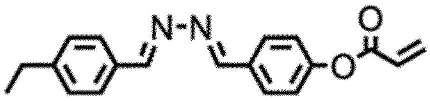
(A4)

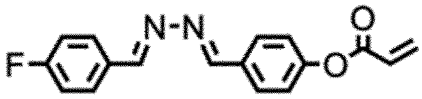
(A5)

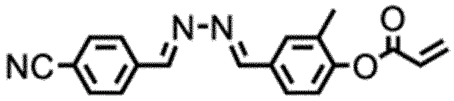
(A6)

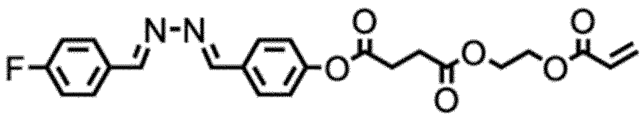
(A7)

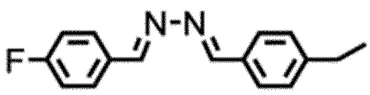
(A8)

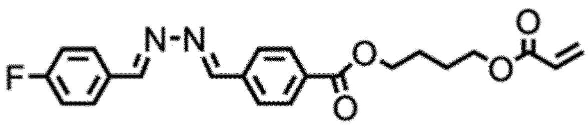
(A9)

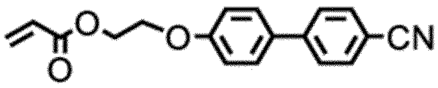
(A10)

In the above-mentioned compound (A3), "*" represents a chiral center.

The cholesteric liquid crystal composition (X) usually contains a rod-like liquid crystal compound having Δn of 0.18 or more and at least two or more reactive groups within one molecule.

As the rod-like liquid crystal compound, a compound represented by the formula (2) may be mentioned.

$$R^3\text{-}C^3\text{-}D^3\text{-}C^5\text{-}M\text{-}C^6\text{-}D^4\text{-}C^4\text{-}R^4 \qquad (2)$$

In the formula (2), $R^3$ and $R^4$ are reactive groups, each independently representing a group selected from the group consisting of a (meth)acrylic group, a (thio)epoxy group, an oxetane group, a thietanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carboxyl group, and an alkoxysilyl group. When the rod-like liquid crystal compound has these reactive groups, a cured product obtained by curing the cholesteric liquid crystal composition has a high film strength sufficient for practical use. Herein, a film strength sufficient for practical use usually corresponds to a pencil hardness (JIS K5400) of HB or higher, and preferably H or higher. By having such a high film strength, the resulting layer becomes less susceptible to scratches, and thereby handleability can be improved.

In the formula (2), $D^3$ and $D^4$ each independently represent a group selected from the group consisting of a single bond, a linear or branched alkyl group of 1 to 20 carbon atoms, and a linear or branched alkylene oxide group of 1 to 20 carbon atoms.

In the formula (2), $C^3$ to $C^6$ each independently represent a group selected from the group consisting of a single bond, -O-, -S-, -S-S-, -CO-, -CS-, -OCO-, $-CH_2-$, $- OCH_2-$, -CH=N-N=CH-, -NHCO-, -OCOO-, $-CH_2COO-$, and $-CH_2OCO-$.

In the formula (2), M represents a mesogen group. Specifically, M represents a group obtained by bonding 2 to 4 skeletons selected from the group consisting of azomethines, azoxies, phenyls, biphenyls, terphenyls, naphthalenes, anthracenes, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolanes, and alkenylcyclohexylbenzonitriles, which may or may not be substituted, by a bonding group such as -O-, -S-, -S-S-, - CO-, -CS-, -OCO-, $-CH_2-$, $-OCH_2-$, -CH=N-N=CH-, -NHCO-, - OCOO-, $-CH_2COO-$, and $-CH_2OCO-$.

Examples of the substituents which the mesogen group M may have may include a halogen atom, an alkyl group of 1 to 10 carbon atoms optionally having a substituent, a cyano group, a nitro group, $-O-R^5$, $-O-C(=O)-R^5$, $-C(=O)-O-R^5$, $-O-C(=O)-O-R^5$, $-NR^5-C(=O)-R^5$, $-C(=O)-NR^5R^7$, and $-O-C(=O)-NR^5R^7$. Herein, $R^5$ and $R^7$ represent a hydrogen atom or an alkyl group of 1 to 10 carbon atoms. When $R^5$ and $R^7$ are an alkyl group, the alkyl group may have an intervening -O-, -S-, -O-C(=O)-, -C(=O)-O-, -O-C(=O)-O-, $-NR^6-C(=O)-$, $-C(=O)-NR^6-$, $-NR^6-$, or -C(=O)- (with a proviso that cases where the intervening group is two or more contiguous -O-'s or - S-'s are excluded). Herein, $R^6$ represents a hydrogen atom or an alkyl group of 1 to 6 carbon atoms.

Examples of the substituents in the above-mentioned "alkyl group of 1 to 10 carbon atoms optionally having a substituent" may include a halogen atom, a hydroxyl group, a carboxyl group, a cyano group, an amino group, an alkoxy group of 1 to 6 carbon atoms, an alkoxyalkoxy group of 2 to 8 carbon atoms, an alkoxyalkoxyalkoxy group of 3 to 15 carbon atoms, an alkoxycarbonyl group of 2 to 7 carbon atoms, an alkylcarbonyloxy group of 2 to 7 carbon atoms, and an alkoxycarbonyloxy group of 2 to 7 carbon atoms.

It is preferable that the rod-like liquid crystal compound has an asymmetric structure. Herein, the asymmetric structure refers to a structure in which $R^3\text{-}C^3\text{-}D^3\text{-}C^5\text{-}$ and $\text{-}C^6\text{-}D^4\text{-}C^4\text{-}R^4$ differ from each other in the formula (2) with the mesogen group M as its center. By using the compound with an asymmetric structure as the rod-like liquid crystal compound, it is possible to further enhance the orientation uniformity.

$\Delta n$ of the rod-like liquid crystal compound is preferably 0.18 or more, and more preferably 0.22 or more. When a rod-like liquid crystal compound with a $\Delta n$ value of 0.30 or more is used, the absorption edge on the long wavelength side of the ultraviolet absorption spectrum may extend to the visible range. However, a rod-like liquid crystal compound with the absorption edge of the spectrum extending to the visible range can also be used as long as the spectrum does not adversely affect the desired optical properties. By using a rod-like liquid crystal compound with such a high $\Delta n$ value, a cholesteric resin layer with high optical properties (e.g., a property of selectively reflecting circularly polarized light) can be obtained. The upper limit of $\Delta n$ may be set to, for example, 0.50.

Preferable specific examples of the rod-like liquid crystal compound may include the following compounds (B1) to (B14). However, such rod-like liquid crystal compounds are not limited to the following compounds.

[Chemical formula 2]

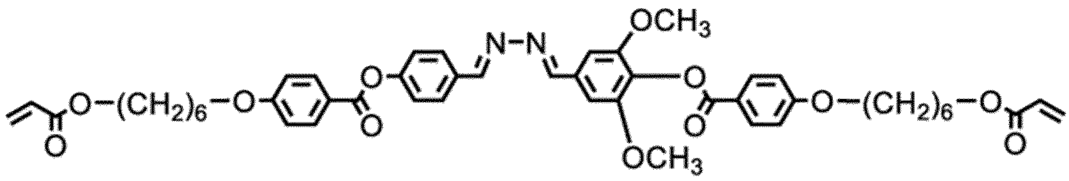

(B1)

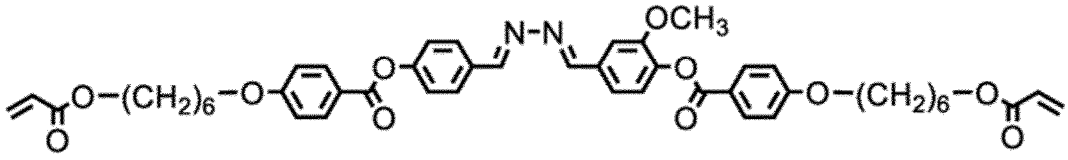

(B2)

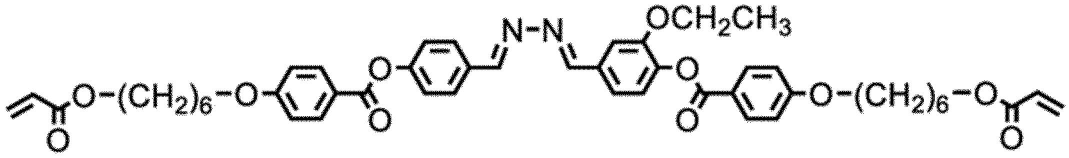

(B3)

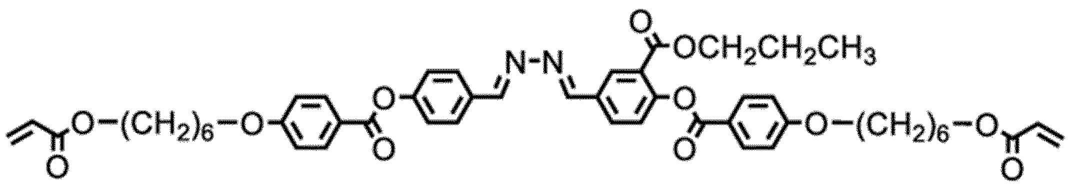

(B4)

[Chemical formula 3]

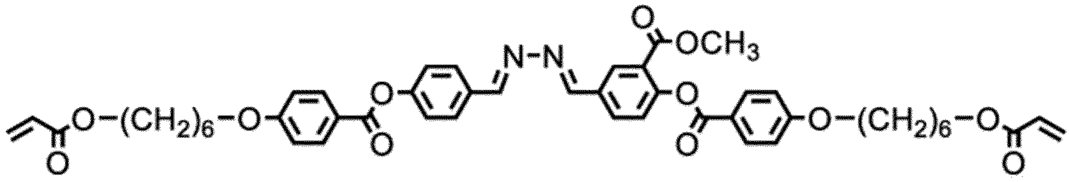

(B5)

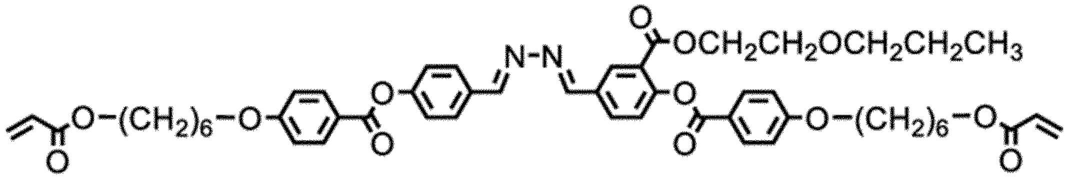

(B6)

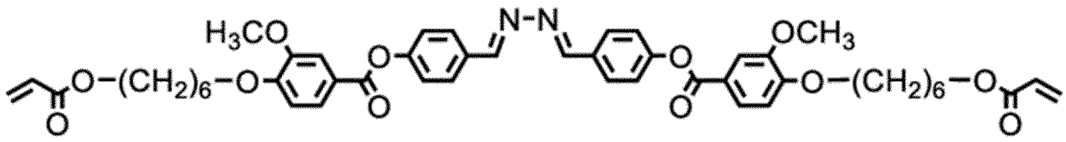

(B7)

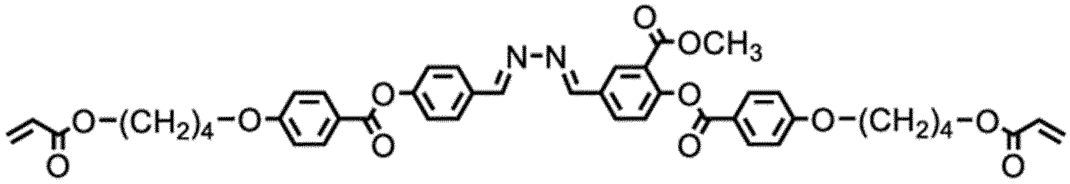

(B8)

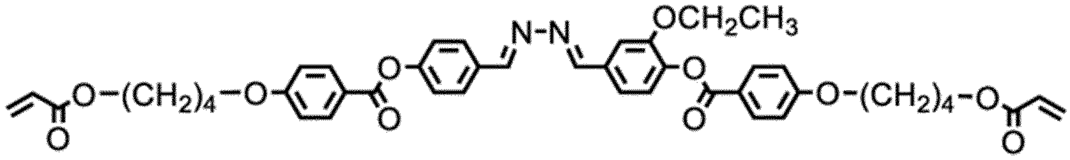

(B9)

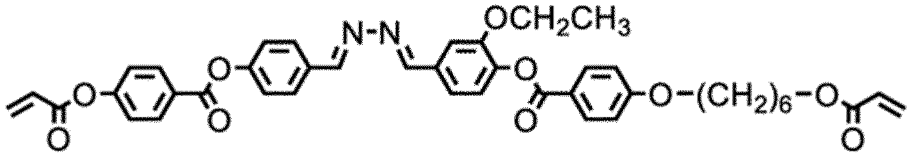

(B10)

[Chemical formula 4]

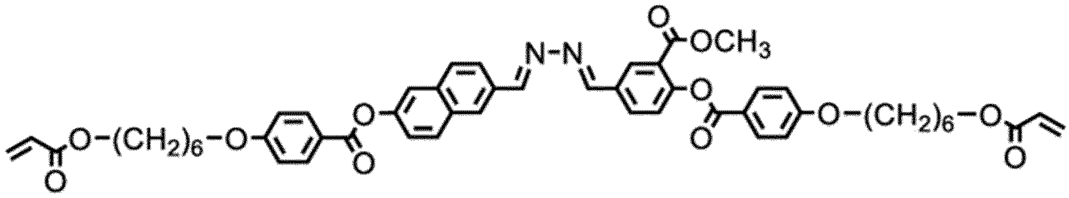

(B11)

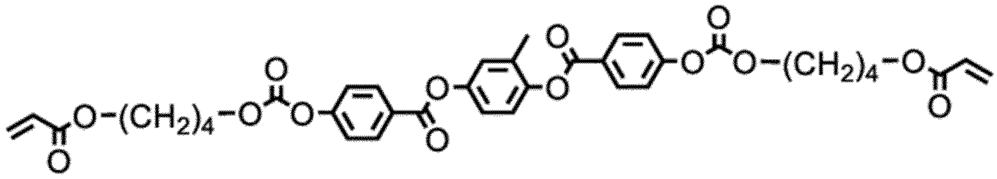

(B12)

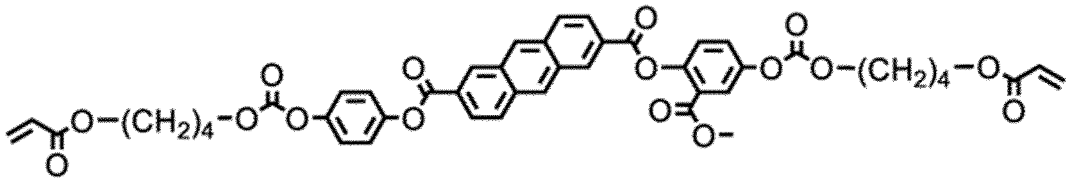

(B13)

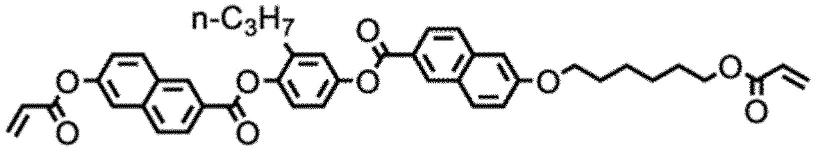

(B14)

With regard to the cholesteric liquid crystal composition (X), the weight ratio represented by (total weight of the compound of the formula (1))/(total weight of the rod-like liquid crystal compound) is preferably 0.05 or more, more preferably 0.1 or more, and particularly preferably 0.15 or more, and is preferably 1 or less, more preferably 0.65 or less, and particularly preferably 0.45 or less. By setting the above-mentioned weight ratio to the lower limit value or more of the above-mentioned range, the orientation uniformity can be enhanced. By setting the weight ratio to the upper limit value or less, the orientation uniformity can be enhanced and the stability of the liquid crystal phase can be enhanced as well. Furthermore, since $\Delta n$ of the liquid crystal composition can be made high, it is possible to stably obtain desired optical properties (e.g., a property of selectively reflecting circularly polarized light). Herein, the total weight is the weight of a compound when one type thereof is used, and is the total weight when two or more types thereof are used.

In the cholesteric liquid crystal composition (X), the molecular weight of the compound of the formula (1) is preferably less than 600, and the molecular weight of the rod-like liquid crystal compound is preferably 600 or more. With this configuration, the compound of the formula (1) can enter the gap of the rod-like liquid crystal compound that has a molecular weight larger than that of the compound of the formula (1), and so the orientation uniformity can be improved.

The cholesteric liquid crystal composition such as the cholesteric liquid crystal composition (X) may optionally contain a crosslinking agent for improving film strength and durability after curing. As the crosslinking agent, those that can react simultaneously at the time of curing the film of the cholesteric liquid crystal composition, can accelerate the reaction when a heat treatment is applied after curing, or can spontaneously cause the reaction by moisture, thereby increasing the crosslinking density of the cholesteric resin layer, and that does not deteriorate the orientation uniformity, can be appropriately selected and used. Therefore, for example, an optional crosslinking agent which allows the composition to cure with ultraviolet rays, heat, moisture, or the like may be suitably used. Examples of the crosslinking agents may include a polyfunctional acrylate compound such as trimethylolpropane tri(meth)acrylate, pentaerythritol tri(meth)acrylate, pentaerythritol tetra(meth)acrylate, dipentaerythritol hexa(meth)acrylate, and 2-(2-vinyloxyethoxy)ethyl acrylate; an epoxy compound such as glycidyl (meth)acrylate, ethylene glycol diglycidyl ether, glycerin triglycidyl ether, and pentaerythritol tetraglycidyl ether; an aziridine compound such as 2,2-bishydroxymethylbutanol-tris[3-(1-aziridinyl)propionate],

4,4-bis(ethyleneiminocarbonylamino)diphenylmethane, and trimethylolpropane-tri-β-aziridinyl propionate; an isocyanate compound such as hexamethylene diisocyanate, an isocyanurate-type isocyanate derived from hexamethylene diisocyanate, a biuret-type isocyanate, and an adduct-type isocyanate; a polyoxazoline compound having an oxazoline group on the side chain; and an alkoxysilane compound such as vinyltrimethoxysilane, N-(2-aminoethyl)3-aminopropyltrimethoxysilane, 3-aminopropyltrimethoxysilane, 3-glycidoxypropyltrimethoxysilane, 3-(meth)acryloxypropyltrimethoxysilane, and N-(1,3-dimethylbutylidene)-3-(triethoxysilyl)-1-propanamine. As the crosslinking agent, one type thereof may be solely used, and two or more types thereof may also be used in combination at any ratio. A publicly known catalyst may be used depending on the reactivity of the crosslinking agent. By using a catalyst, productivity can be improved in addition to the improvement in film strength and durability of the cholesteric resin layer.

The amount of the crosslinking agent is preferably such that the amount of the crosslinking agent in the cured film obtained by curing the film of the cholesteric liquid crystal composition is 0.1% by weight to 15% by weight. By setting the amount of the crosslinking agent to the lower limit value or more of the above-mentioned range, the crosslinking density can be effectively increased. By setting the amount to the upper limit value or more, the stability of the film of the cholesteric liquid crystal composition can be increased.

The cholesteric liquid crystal composition may optionally contain a photoinitiator. As the photoinitiator, for example, a publicly known compound that generates a radical or an acid by ultraviolet or visible light may be used. Specific examples of the photoinitiator may include benzoin, benzyl dimethyl ketal, benzophenone, biacetyl, acetophenone, Michler's ketone, benzyl, benzyl isobutyl ether, tetramethyl thiuram mono(di)sulfide, 2,2-azobisisobutyronitrile, 2,2-azobis-2,4-dimethylvaleronitrile, benzoyl peroxide, di-tert-butyl peroxide, 1-hydroxycyclohexyl phenyl ketone, 2-hydroxy-2-methyl-1-phenyl-propane-1-one, 1-(4-isopropylphenyl)-2-hydroxy-2-methylpropane-1-one, thioxanthone, 2-chlorothioxanthone, 2-methylthioxanthone, 2,4-diethylthioxanthone, methylbenzoylformate, 2,2-diethoxyacetophenone, β-ionone, β-bromostyrene, diazoaminobenzene, α-amylcinnamic aldehyde, p-dimethylaminoacetophenone, p-dimethylaminopropiophenone, 2-chlorobenzophenone, pp'-dichlorobenzophenone, pp'-bis-diethylaminobenzophenone, benzoin ethyl ether, benzoin isopropyl ether, benzoin n-propyl ether, benzoin n-butyl ether, diphenyl sulfide, bis(2,6-methoxybenzoyl)-2,4,4-trimethyl-pentylphosphine oxide, 2,4,6-trimethylbenzoyldiphenyl-phosphine oxide, bis(2,4,6-trimethylbenzoyl)-phenylphosphine oxide, 2-methyl-1[4-(methylthio)phenyl]-2-morpholinopropane-1-one, 2-benzyl-2-dimethylamino-1-(4-morpholinophenyl)-butane-1-one, anthracene benzophenone, α-chloroanthraquinone, diphenyldisulfide, hexachlorobutadiene, pentachlorobutadiene, octachlorobutene, 1-chlormethylnaphthalene, 1,2-octanedione, carbazoleoxime compounds such as 1-[4-(phenylthio)-2-(o-benzoyloxime)] and 1-[9-ethyl-6-(2-methylbenzoyl)-9H-carbazol-3-yl]ethanone 1-(o-acetyloxime), (4-methylphenyl)[4-(2-methylpropyl)phenyl]iodonium hexafluorophosphate, 3-methyl-2-butynyltetramethylenesulfonium hexafluoroantimonate, and diphenyl-(p-phenylthiophenyl)sulfonium hexafluoroantimonate. As these compounds, one type thereof may be solely used, and two or more types thereof may also be used in combination at any ratio. If necessary, a tertiary amine compound as a publicly known photosensitizer or polymerization accelerator may be used to control curability.

The amount of the photoinitiator is preferably 0.03% by weight to 7% by weight in the cholesteric liquid crystal composition. By setting the amount of the photoinitiator to the lower limit value or more of the above-mentioned range, the degree of polymerization can be increased, so that the film strength of the cholesteric resin layer can be increased. By setting the amount to the upper limit value or less, the orientation of the liquid crystal material can be improved, so that the liquid crystal phase of the cholesteric liquid crystal composition can be stabilized.

The cholesteric liquid crystal composition may optionally contain a surfactant. As the surfactant, for example, those that do not prevent orientation may be appropriately selected and used. Preferable examples of such a surfactant may include a nonionic surfactant containing a siloxane or a fluorinated alkyl group in a hydrophobic group moiety. Among these, an oligomer having two or more hydrophobic group moieties in one molecule is particularly suitable. Specific examples of these surfactants may include PolyFox PF-151N, PF-636, PF-6320, PF-656, PF-6520, PF-3320, PF-651, and PF-652 available from OMNOVA Solutions Inc.; Ftergent FTX-209F, FTX-208G, and FTX-204D available from Neos Co., Ltd.; and Surflon KH-40 available from AGC Seimi Chemical Co., Ltd. As the surfactants, one type thereof may be solely used, and two or more types thereof may also be used in combination at any ratio.

The amount of the surfactant is preferably set such that the amount of the surfactant in the cured film obtained by curing the cholesteric liquid crystal composition is 0.05% by weight to 3% by weight. By setting the amount of the surfactant to the lower limit value or more of the above-mentioned range, the orientation regulating force at the air interface can be increased, and therefore, orientation defects can be suppressed. By setting the amount to the upper limit value or less, it is possible to suppress the decrease in the orientation uniformity due to the excessive surfactant entering between the liquid crystal molecules.

The cholesteric liquid crystal composition may optionally contain a chiral agent. Usually, the twisting direction of the cholesteric resin layer may be appropriately selected by choosing the type and structure of the chiral agent to be used. In a case where the twist is in the right direction, a chiral agent for imparting dextrorotation may be used, and in a case where the twist is in the left direction, a chiral agent for imparting levorotation may be used. Specific examples of the chiral agent that can appropriately be used may include those described in Japanese Patent Application Laid-Open No.

2005-289881 A, Japanese Patent Application Laid-Open No. 2004-115414 A, Japanese Patent Application Laid-Open No. 2003-66214 A, Japanese Patent Application Laid-Open No. 2003-313187 A, Japanese Patent Application Laid-Open No. 2003-342219 A, Japanese Patent Application Laid-Open No. 2000-290315 A , Japanese Patent Application Laid-Open No. Hei. 6-072962 A, U.S. Patent No. 6468444, International Publication No. 98/00428, Japanese Patent Application Laid-Open No. 2007-176870 A and the like, and they may be available as Paliocolor LC756 from BASF. As the chiral agents, one type thereof may be solely used, and two or more types thereof may also be used in combination at any ratio.

The amount of the chiral agent may be optionally set within a range in which the chiral agent does not decrease the desired optical properties. The specific amount of the chiral agent is usually 1% by weight to 600 by weight in the cholesteric liquid crystal composition.

If necessary, the cholesteric liquid crystal composition may further contain other optional components. Examples of the optional components may include a solvent, a polymerization inhibitor for improving pot life, an antioxidant for improving durability, an ultraviolet absorber, and a light stabilizer. As the optional components, one type thereof may be solely used, and two or more types thereof may also be used in combination at any ratio. The amount of these optional components may be freely set within a range in which the optional components do not decrease the desired optical properties.

The method for producing the cholesteric liquid crystal composition is not particularly limited and the cholesteric liquid crystal composition may be produced by mixing the above-mentioned respective components.

The cholesteric resin layer may be obtained, for example, by subjecting a surface of a supporting body made of a film of a transparent resin or the like to a treatment such as a corona discharge treatment and a rubbing treatment, if necessary, further providing an orientation film if necessary, further forming a film of a cholesteric liquid crystal composition on this surface, and further performing an orientation treatment and/or a curing treatment if necessary.

Examples of the supporting body that can be used for forming the cholesteric resin layer may include a single-layer or multilayer film of a synthetic resin such as an alicyclic olefin polymer, a chain olefin polymer such as polyethylene and polypropylene, triacetyl cellulose, polyvinyl alcohol, polyimide, polyarylate, a polyester such as polyethylene terephthalate, polycarbonate, polysulfone, polyethersulfone, a modified acrylic polymer, an epoxy resin, polystyrene, and an acrylic resin.

The orientation film may be formed, for example, by applying a corona discharge treatment or the like to the surface of a supporting body if necessary, applying a solution, in which a material for the orientation film is dissolved in a solvent, onto the surface, drying the applied solution, and then performing a rubbing treatment on the resulting film.

Examples of the material for the orientation film may include cellulose, a silane coupling agent, polyimide, polyamide, polyvinyl alcohol, epoxy acrylate, a silanol oligomer, polyacrylonitrile, a phenol resin, polyoxazole, and cyclized polyisoprene.

The coating of the cholesteric liquid crystal composition on the supporting body or on the orientation film may be performed by a publicly known method, for example, an extrusion coating method, a direct gravure coating method, a reverse gravure coating method, a die coating method, a bar coating method, or the like.

The orientation treatment may be performed, for example, by warming a film of a cholesteric liquid crystal composition at 50°C to 150°C for 0.5 minute to 10 minutes. By subjecting the film to the orientation treatment, the cholesteric liquid crystal composition in the film can be well oriented.

The curing treatment may be performed by conducting once or more of a combination of light irradiation and a warming treatment.

The warming condition may be at a temperature of, for example, usually 40°C or higher, preferably 50°C or higher, and usually 200°C or lower, preferably 140°C or lower, and for a time of usually 1 second or longer, preferably 5 seconds or longer, and also usually 3 minutes or shorter, preferably 120 seconds or shorter.

The light used for light irradiation includes not only visible light but also ultraviolet light and other electromagnetic waves. The light irradiation may be performed, for example, by irradiating light with wavelengths of 200 nm to 500 nm for 0.01 second to 3 minutes.

Herein, by alternately repeating the weak UV irradiation at 0.01 $mJ/cm^2$ to 50 $mJ/cm^2$ and the heating a plurality of times, it is possible to obtain a circularly polarized light separating function with a wide reflection bandwidth due to the size of the pitches of the helical structures being continuously greatly changed. Furthermore, the cholesteric resin layer may be obtained by completely polymerizing the liquid crystal compound by irradiating the cholesteric resin layer with relatively strong ultraviolet rays such as at 50 $mJ/cm^2$ to 10,000 $mJ/cm^2$ after performing the broadening of the reflection bandwidth by the above-mentioned weak ultraviolet ray irradiation or the like. The broadening of the reflection bandwidth and the irradiation of strong ultraviolet rays described above may be performed under air, or some or all of the processes thereof may be performed in an atmosphere in which the oxygen concentration is controlled (e.g., under a nitrogen atmosphere).

The number of performing the process of applying the cholesteric liquid crystal composition onto another layer such as an orientation film and curing the composition is not limited to one time, but the application and curing may be repeated a plurality of times to form two or more cholesteric resin layers. However, when a cholesteric liquid crystal

composition such as the cholesteric liquid crystal composition (X) is used, it is possible to easily form a cholesteric resin layer that contains a well-oriented rod-like liquid crystal compound with Δn of 0.18 or more and that has a thickness of 5 μm or more even by only one time of the process of applying and curing the cholesteric liquid crystal composition.

The cholesteric resin layer thus obtained as it is may be used as the first layer together with the supporting body and the orientation film. If necessary, the supporting body or the like may be peeled off, and only the cholesteric resin layer may be transferred to be used as the first layer.

The thickness of the first layer is preferably 2 μm or more, and more preferably 3 μm or more, and is preferably 1000 μm or less, and more preferably 500 μm or less. By setting the thickness of the first layer to the lower limit value or more, it is possible to make it difficult to visually recognize the information of the second layer when observing the second layer from the first layer side, thereby making it possible to more clearly identify the authenticity. By setting the thickness of the first layer to the upper limit value or less, the transparency can be enhanced. Herein, the thickness of the first layer refers to the total thickness of respective layers when the first layer includes two or more layers, and refers to the thickness of the first layer when the first layer includes one layer. When a supporting body is used, the in-plane retardation of the supporting body is preferably 20 nm or less, more preferably 10 nm or less, and ideally 0 nm. By setting the retardation to the upper limit value or less, the circularly polarized light generated by the first layer and the second layer is maintained, making it possible to more clearly determine the authenticity.

(Second Layer)

The second layer is a layer disposed in a manner of overlapping with the first layer, and is a layer disposed directly on (i.e., in contact with) the first layer or indirectly (i.e., separated from the first layer by, e.g., having another layer therebetween) in a manner of overlapping with the first layer. The second layer is preferably a layer disposed directly or indirectly on the surface of the first layer in a shape of a predetermined pattern.

The second layer is a layer capable of reflecting at least a portion of circularly polarized light rotating in the same direction as the rotation direction of the circularly polarized light that is reflected by the first layer and of allowing transmission of the circularly polarized light rotating in the direction opposite to the rotation direction of the circularly polarized light that is reflected by the first layer. In other words, the second layer is a layer that does not reflect or hardly reflects circularly polarized light rotating in the direction opposite to the rotation direction of circularly polarized light that is reflected by the first layer.

The second layer is a layer containing flakes of a resin having cholesteric regularity (also referred to as a "cholesteric resin"). Even when a cholesteric resin layer suitable as the first layer 11 is formed into a pulverized product, the cholesteric resin layer is capable of reflecting one of clockwise circularly polarized light and counterclockwise circularly polarized light and of allowing transmission of the other circularly polarized light within at least a portion of a visible light region. Therefore, it is preferable that such a pulverized product is used as the flakes in the second layer.

The volume-average particle diameter (D50) of the flakes contained in the second layer is usually 70 μm or more, and preferably 75 μm or more, and is preferably 300 μm or less, more preferably 200 μm or less, and particularly preferably 150 μm or less. This is because when the volume-average particle diameter of the flakes is equal to or more than the above-mentioned lower limit value, the bottom surface area of the flakes can be made relatively large, and the side surface area can be made relatively small. Accordingly, the visibility of the front and back surfaces of the identification medium can be improved. When the volume-average particle diameter of the flakes is equal to or less than the above-mentioned value of condition, the reflected light from the second layer can be favorably scattered, and the information of the second layer can be visually recognized with ease.

The particle diameter of each of the flakes refers to the diameter of the bottom surface when the flakes are assumed to have a disk form. The volume-average particle diameter (D50) of the flakes is a 50% volume-average particle diameter obtained by measurement and calculation through a dry method with a particle size distribution measuring device (for example, a laser diffraction/scattering particle size distribution analyzer "LA-960V series" manufactured by Horiba, Ltd.) based on a laser scattering and diffraction method. The 50% volume-average particle diameter is a particle diameter at a point where the cumulative frequency calculated from a small-diameter side in the obtained particle size distribution (by volume) reaches 50%. In the above-mentioned measurement device, measurement of the diameter of the bottom surface of the flakes may be performed with assumption that the flakes are in true spherical shape having the above-mentioned diameter.

The ratio of the area of one bottom surface relative to the area of the side surface (bottom surface area / side surface area, or S ratio) of the flakes is preferably 1.5 or more, and more preferably 1.7 or more, and is preferably 3.0 or less, and more preferably 2.7 or less. When the S ratio is equal to or more than the above-mentioned lower limit value, the see-through of the second layer during observation of the identification medium from the first layer side can be effectively suppressed. When the S ratio is equal to or less than the above-mentioned upper limit value, the reflected light from the second layer can be favorably scattered, and thereby recognizability of the information of the second layer can be improved.

The ratio of the area of one bottom surface relative to the area of the side surface (bottom surface area / side surface area, or S ratio) of the flakes refers to the ratio of the area of one bottom surface relative to the area of the side surface when the flakes are assumed to have a disk form, and is a value calculated by the following formula (3) from the volume-average particle diameter of the flakes and the thickness of the flakes.

$$\text{S Ratio} = \{\pi(r/2)^2\}/(\pi r L) \quad (3)$$

In the formula (3), r (μm) is the volume-average particle diameter of the flakes (the diameter of the bottom surface of the flakes), and L (μm) is the thickness of the flakes.

The thickness of the flakes may be appropriately selected according to a desired volume-average particle diameter of the flakes, and is not particularly limited. The thickness thereof is preferably 2 μm or more, and more preferably 3 μm or more, and is preferably 10 μm or less, and more preferably 7.5 μm or less. For example, the thickness of the flakes may be the same as or different from the thickness of the first layer.

The average refractive index of the flakes may be appropriately selected according to the cholesteric resin that is the material for the flakes. The average refractive index is, for example, 1.4 or more, and preferably 1.5 or more, and is preferably 1.8 or less, and more preferably 1.7 or less. This is because when the average refractive index of the flakes falls within the above-mentioned range, the refractive index difference between the flakes and a binder can be made small, and interface reflection between the flakes and the outside thereof can be suppressed.

The average refractive index of the flakes may be measured as the average refractive index of the cholesteric resin layer having the same thickness as that of the flakes. The cholesteric resin layer has a helical structure configured by helically disposing a rod-like liquid crystal compound contained in the cured product of the cholesteric liquid crystal composition. The molecules of the rod-like liquid crystal compound have anisotropy of refractive index. Therefore, evaluation of the refractive index of the overall cholesteric resin layer can be performed by measuring the refractive index in each of four in-plane directions of the cholesteric resin layer, and then calculating the average refractive index that is the arithmetic average. The average refractive index of the cholesteric resin layer may be determined, for example, by measuring the refractive indices in four in-plane directions (x1, x2, x3, and x4) of a single layer of the cholesteric resin layer with a prism coupler (for example, model 2010 manufactured by Metricon Corporation) under conditions of a measurement wavelength of 560 nm, a temperature of 20°C±2°C, and a humidity of 60±5%, and calculating the arithmetic average value from the obtained four refractive indices. Regarding the four in-plane directions x1, x2, x3, and x4, when x1 is a standard (0°), x2 may be a direction of 45°, x3 may be a direction of 90°, and x4 may be a direction of 135°.

The ratio of the area of a flake group per unit area of the second layer is preferably less than 600, and more preferably 50% or less, and is preferably 200 or more, and may be 250 or more. This is because when the ratio of the area of a flake group per unit area of the second layer is less than the above-mentioned upper limit value, overlapping of the flakes can be suppressed, and thereby the dispersion of the flakes with the bottom surface of the flakes tilting with respect to the surface direction of the second layer can be suppressed, leading to suppression of interface reflection of non-polarized light on the side surface. On the other hand, when the ratio of the area is equal to or more than the above-mentioned lower limit value, the visibility of the second layer can be improved.

The ratio of the area of the flake group per unit area of the second layer may be determined, for example, by observing the second layer with a digital microscope (for example, "VHX-7000" manufactured by Keyence Corporation), followed by image analysis with the digital microscope, measuring the area of the flakes per unit volume (1 $mm^2$) of the second layer, and calculating the total value.

From the viewpoint of clear identification of authenticity and high degree of freedom of design, it is preferable that the cholesteric resin that is the material for the flakes is one having a reflectance as high as possible, and thus having a high reflectance in the wavelength range for reflection.

The flakes of the cholesteric resin may be produced by, for example, a method for producing peel pieces described in Japanese Patent No. 6142714 B.

Together with the flakes of the cholesteric resin, flakes of a material having no polarization properties may be used. Examples of the flakes having no polarization properties may include flakes of at least one or more selected from carbon black, and an oxide, a nitride and an oxynitride of metals belonging to Groups 3 to 11 of the fourth period of the Periodic Table of the Elements. As these flakes, one type thereof may be solely used, and two or more types thereof may also be used in combination at any ratio.

In the present embodiment, the second layer may be produced, for example, by applying an ink containing a flake that is composed of a pulverized product of a cholesteric resin layer, a solvent, a binder, and, if necessary, an optional component, onto a supporting body, and drying the ink.

As the solvent, for example, an inorganic solvent such as water may be used, but an organic solvent is usually used. Examples of the organic solvents may include organic solvents such as ketones, alkyl halides, amides, sulfoxides, heterocyclic compounds, hydrocarbons, esters, and ethers. Among these, ketones are preferable in consideration of an environmental load. As the solvents, one type thereof may be solely used, and two or more types thereof may also be used

in combination at any ratio.

The amount of the solvent is usually 40 parts by weight or more, preferably 60 parts by weight or more, and more preferably 80 parts by weight or more, and is usually 1000 parts by weight or less, preferably 800 parts by weight or less, and more preferably 600 parts by weight or less, relative to 100 parts by weight of the pulverized product of the cholesteric resin layer. By making the amount of the solvent fall within the above-mentioned range, the coating property of the ink can be improved.

As the binder, a polymer is usually used. Examples of the polymer may include a polyester-based polymer, an acryl-based polymer, a polystyrene-based polymer, a polyamide-based polymer, a polyurethane-based polymer, a polyolefin-based polymer, a polycarbonate-based polymer, and a polyvinyl-based polymer. As the binders, one type thereof may be solely used, and two or more types thereof may also be used in combination at any ratio.

The refractive index of the binder is preferably 1.4 or more, and preferably 1.5 or more, and is preferably 1.8 or less, and more preferably 1.7 or less. The refractive index of the binder may be such that the absolute value of the difference from the average refractive index of the flakes is preferably 0.2 or less, more preferably 0.1 or less, particularly preferably 0.05 or less, and ideally 0, and may be 0.001 or more. This is because when the refractive index of the binder and the absolute value of the difference between the average refractive index of the flakes and the refractive index of the binder fall within the above-mentioned respective ranges, the difference in refractive index from the binder can be reduced, and the interface reflection with the outside of the flakes can be suppressed.

The refractive index of the binder may be measured using a prism coupler (e.g., model 2010 manufactured by Metricon Corporation) under conditions of a measurement wavelength of 560 nm, a temperature of 20°C±2°C, and a humidity of 60±5%.

The amount of the binder is usually 20 parts by weight or more, preferably 40 parts by weight or more, and more preferably 60 parts by weight or more, and is usually 1000 parts by weight or less, preferably 800 parts by weight or less, and more preferably 600 parts by weight or less, relative to 100 parts by weight of the pulverized product of the cholesteric resin layer. By making the amount of the binder fall within the above-mentioned range, the coating property of the ink can be improved. In addition, the pulverized product of the cholesteric resin layer can be stably fixed in the second layer.

Examples of optional components that the ink may contain may include an antioxidant, an ultraviolet absorber, a light stabilizer, and a bluing agent. As these components, one type thereof may be solely used, and two or more types thereof may also be used in combination at any ratio.

The second layer may be obtained by printing the above-mentioned ink on the first layer in a predetermined pattern and drying the ink to obtain the second layer as a layer containing flakes composed of a pulverized product of the cholesteric resin layer.

The above-mentioned ink may contain, instead of the polymer serving as the binder or in combination with the polymer, a monomer(s) of the polymer. In this case, a second layer containing flakes composed of a pulverized product of the cholesteric resin layer and a binder may be produced by applying the ink onto a supporting body, drying the ink, and then polymerizing a monomer(s). When the ink contains a monomer(s), the ink preferably contains a polymerization initiator.

(Fourth layer and substrate layer)

As shown in FIG. 6, the identification medium 10 may include a fourth layer 14 disposed in a manner of covering the second layer 12, if necessary. When the identification medium 10 includes the fourth layer 14, the identification medium 10 may include a substrate layer 15 provided on a surface of the fourth layer 14 opposite to the surface on the first layer 11 side. When the substrate layer 15 is included, the fourth layer 14 functions as a tackiness layer that bonds the first layer 11 and the second layer 12 to the substrate layer 15.

The refractive index of the fourth layer is preferably 1.4 or more, and preferably 1.5 or more, and is preferably 1.8 or less, and more preferably 1.7 or less. The refractive index of the fourth layer may be such that the absolute value of the difference from the refractive index of the binder in the second layer is preferably 0.2 or less, more preferably 0.1 or less, particularly preferably 0.05 or less, and ideally 0, and may be 0.001 or more. Since the second layer is a layer containing flakes, its surface tends to have unevenness. When the second layer has surface unevenness, scattered light is likely to occur, which may cause the second layer to be visible from the first layer side. In addition, there is a concern that the interface reflection between the second layer and its outside may cause the second layer to be visible from the first layer side. In response to this, by providing the fourth layer in which the absolute value of the difference between the refractive index of the binder contained in the second layer and the refractive index of the fourth layer falls within the above-mentioned range, the refractive index difference between the binder in the second layer that is substantially in contact with the fourth layer and the fourth layer can be reduced. Therefore, the occurrence of scattered light due to the surface unevenness of the second layer and the interface reflection between the second layer and the fourth layer can thereby be suppressed, leading to further improvement in visibility of the identification medium.

The refractive index of the fourth layer may be measured using a prism coupler (e.g., model 2010 manufactured

by Metricon Corporation) under conditions of a measurement wavelength of 560 nm, a temperature of 20°C±2°C, and a humidity of 60±5%.

As the material for the fourth layer, a thermoplastic resin may be used. As the thermoplastic resin, general thermoplastic resins having normal transparency in a cured state that can be used as an optical component may be appropriately selected and used. Specific examples of thermoplastic resins may include the resin compositions described in International Publication No. 2014/077267 and the thermoplastic resins described in International Publication No. 2019/151079.

Other specific examples of thermoplastic resins that can be used may include commercially available thermoplastic resins as so-called hot melt adhesive layers. An example of such a commercially available product is the product name "Kuran Seal GL" (manufactured by Kurabo Industries, Ltd.).

The thickness of the fourth layer is preferably 5 μm or more, and more preferably 10 μm or more, and is preferably 100 μm or less, and more preferably 50 μm or less. By setting the thickness of the tackiness layer to the above-mentioned lower limit value or more, high adhesive strength can be obtained, and by setting the thickness of the tackiness layer to the above-mentioned upper limit value or less, optical properties such as transmittance can be improved.

The transmittance of fourth layer preferably in 420 nm to 650 nm is preferably 80% or more, and more preferably 85% or more. The light transmittance may be measured using an ultraviolet-visible spectrometer.

The substrate layer is a layer that functions as a protective layer for the first layer and the second layer in the identification medium. The substrate layer is a layer that also imparts smoothness to the surface of the identification medium.

The haze value of the substrate layer is preferably 1.0% or less, and preferably 0.5% or less. The haze value is ideally 0%. Haze may be measured using a haze meter (turbidimeter) according to JIS K7361-1997.

Examples of the substrate layer may include plastic films and sheets such as a vinyl chloride sheet and an acrylic resin sheet, and a glass substrate.

The thickness of the substrate layer 14 is preferably 50 μm or more, and more preferably 100 μm or more, and is preferably 2000 μm or less, and more preferably 1000 μm or less. By setting the thickness of the substrate layer to the above-mentioned lower limit value or more, the strength of the identification medium can be increased, and by setting the thickness of the substrate layer to the above-mentioned upper limit value or less, the optical properties such as transmittance can be improved.

The visible light transmittance of the substrate layer 14 is preferably 80% or more, and more preferably 85% or more. From the viewpoint of maintaining the circularly polarized state of the first layer 11, the retardation of the substrate layer 14 in in-plane directions is preferably 20 nm or less, more preferably 10 nm or less, and ideally 0. Visible light transmittance may be measured using an ultraviolet-visible spectrometer.

(Properties of identification medium)

With regard to the identification medium 10 according to the present embodiment, the ratio ($Ssf_2/s_2$) of $Ssf_2$ defined by the following formula (5) relative to $S_2$ defined by the following formula (4) is usually more than 0.7.
[Mathematical formula 1]

$$S_2=\int_{400}^{780}\{(Rf_2(\lambda))*(Rf_2(\lambda))\}^{\wedge}(1/2)\cdot d\lambda \quad (4)$$

In the formula (4), λ represents a wavelength (nm), and $Rf_2(\lambda)$ represents a reflectance at the wavelength X of the second layer. The $S_2$ value defined by the formula (4) is an integrated value of the reflectance $Rf_2$ of the second layer at wavelengths of 400 nm to 780 nm.
[Mathematical formula 2]

$$Ssf_2=\int_{400}^{780}\{(Rs(\lambda))*(Rf_2(\lambda))\}^{\wedge}(1/2)\cdot d\lambda \quad (5)$$

In the formula (5), λ represents a wavelength (nm), and Rs(X) represents a reflectance at the wavelength λ of the first layer. The $Ssf_2$ value defined by the formula (5) is an integrated value of square root of product of the reflectance Rs of

the first layer and the reflectance $Rf_2$ of the second layer at wavelengths of 400 nm to 780 nm.

Rs(λ) and $Rf_2$(λ) are a reflectance at a wavelength (λ) of a case wherein non-polarized light with a wavelength within 400 nm to 780 nm enters a layer of interest, and the reflectance may be measured with an ultraviolet-visible spectrophotometer (UV-Vis 550, manufactured by JASCO Corporation). The value measured with the above-mentioned device may include interface reflection, and therefore, in this case, the reflectances Rs(X) and $Rf_2$(λ) are calculated by subtracting the amount of the interface reflection.

When $Ssf_2/S_2$ is more than 0.7, the information of the second layer can be visually recognized with the naked eye during observation of the identification medium from the second layer side, and the information of the second layer cannot be visually recognized during observation of the inverted identification medium from the first layer side. Therefore, a large $Ssf_2/S_2$ value is effective for the determination of authenticity. The $Ssf_2/S_2$ value is preferably 0.75 or more, and more preferably 1.0 or more. When the $Ssf_2/S_2$ value is 1.0 or more, a difference in determining whether visual identification is possible or impossible among observers is substantially eliminated, and objective determination can be performed. The upper limit value of the $Ssf_2/S_2$ value is not particularly limited, and may be preferably 5 or less, and more preferably 3 or less. When the upper limit value falls within such a range, the information of the second layer, such as a character pattern, can be favorably visually recognized.

The reflectance at all points of the wavelengths in a wavelength region of 420 nm to 650 nm of non-polarized light entering the first layer is preferably 35% or more and 50% or less. The reflectance is more preferably 40% or more, and further preferably 45% or more. When the reflectance of non-polarized light entering the first layer falls within the above-mentioned range, the first layer may become a broadband layer, and thus the wavelength region where the reflection spectrum of the first layer overlaps with the reflection spectrum of the second layer can be increased, leading to an increase in the $Ssf_2/S_2$ value. The reflectance of non-polarized light entering the first layer may include that of interface reflection.

The wavelength of the reflected light from the first layer and the wavelength of the reflected light from the second layer are each usually in a visible light region, and there may or may not be a difference ΔE* between the hue of the reflected light from the first layer and the hue of the reflected light from the second layer. When there is a difference ΔE* between the hues, the value of the difference may be appropriately selected. The method for measuring the difference ΔE* between the hues will be described in Embodiment 2 described below.

The identification medium according to the present embodiment is preferably transparent or translucent. The identification medium 10 that is transparent or translucent is preferable since replication and counterfeiting of the identification medium can be made difficult. The transparency of the identification medium is not limited as long as the identification medium has a transparency to an extent such that, when the identification medium is placed on an article having a character, a picture, or the like printed thereon, the character or the like printed on the article can be visually recognized through the identification medium. When the identification medium is transparent or translucent, the transmittance of non-polarized light entering the identification medium may be preferably 20% or more, and more preferably 40% or more. The upper limit of the transmittance is not limited, and may be set to, for example, 90%. The above-mentioned transmittance may be measured, for example, with the above-mentioned ultraviolet-visible spectrophotometer.

[Embodiment 2]

Hereinafter, an identification medium according to Embodiment 2 of the present invention will be described with reference to FIGs. 7 to 14.

FIG. 7 is an exploded perspective view schematically illustrating the identification medium according to Embodiment 2 of the present invention. FIG. 8 is a schematic plan view of the identification medium of FIG. 7 seen from a second layer side. FIG. 9 is a schematic plan view of the identification medium of FIG. 7 seen from a third layer side. FIG. 10 is a cross-sectional view schematically illustrating a cross section in an X2-X2 direction of FIGs. 8 and 9. FIG. 11 is an exploded cross-sectional view schematically illustrating a path of light when light enters from the second layer side of the identification medium. FIG. 12 is an exploded cross-sectional view schematically illustrating a path of light when light enters from the third layer side of the identification medium. FIGs. 13 and 14 are each a cross-sectional view schematically illustrating an example in which the identification medium according to Embodiment 2 includes an optional configuration.

An identification medium 100 according to the present embodiment differs from that according to Embodiment 1 in that the identification medium 100 includes a third layer 113 disposed on a surface of a first layer 111 opposite to a surface on which a second layer 112 is disposed in a manner of overlapping with the first layer 111.

The identification medium 100 according to the present embodiment is an embodiment that is configured by disposing a third layer on a surface of the first layer 11 of the identification medium 10 according to Embodiment 1, the surface being opposite to a surface where the second layer 12 is disposed. In other words, the first layer 111 and the second layer 112 of the identification medium 100 according to the present embodiment correspond to the first layer 11 and the second layer 12 of the identification medium 10 according to Embodiment 1, respectively. In the following description, a difference between Embodiment 2 and Embodiment 1 will be mainly described.

(Summary of identification medium)

As shown in FIGs. 7 to 10, the identification medium 100 according to the present embodiment includes the first layer 111, the second layer 112 disposed in a manner of overlapping with the first layer 111, and the third layer 113 disposed on the surface of the first layer 111 opposite to the surface on which the second layer 112 is disposed in a manner of overlapping with the first layer 111. The third layer 113 is a layer capable of allowing transmission of the circularly polarized light rotating in a direction opposite to the rotation direction of the circularly polarized light that is reflected by the first layer 111, that is, a layer that does not reflect or hardly reflects that circularly polarized light. Furthermore, the third layer 113 is a layer containing flakes 113f of a resin having cholesteric regularity. In the present embodiment, the volume-average particle diameter (D50) of the flakes 112f contained in the second layer 112 and the flakes 113f contained in the third layer 113 is equal to or more than a specific value. In FIGs. 7 and 9, the third layer 113 is a portion of a character pattern of "EFG" formed directly on the lower (in FIGs. 10 and 13) surface of a substrate layer 114 (see FIG. 12). The third layer 113 is formed at a position where the entire area of the third layer 113 completely overlaps with the first layer 111.

The method of using the identification medium according to the present embodiment will be described with reference to the drawings. FIG. 11 is an exploded cross-sectional view schematically illustrating a path of light when light enters from the second layer 112 side of the identification medium. FIG. 12 is an exploded cross-sectional view schematically illustrating a path of light when light enters from the third layer 113 side of the identification medium. FIGs. 11 and 12 show an example in which the first layer 111 is a layer capable of reflecting clockwise circularly polarized light and of allowing transmission of the counterclockwise circularly polarized light, and the second layer 112 and the third layer 113 are a layer capable of reflecting at least a portion of the clockwise circularly polarized light and of allowing transmission of the counterclockwise circularly polarized light, that is, a layer that does not reflect or hardly reflects the counterclockwise circularly polarized light.

As shown in FIG. 11, when non-polarized light A1 such as natural light enters from the second layer 112 side, at least a portion of clockwise circularly polarized light A1R of the non-polarized light A1 is reflected by the flakes of the second layer 112. The flakes contained in the second layer 112 are usually dispersed with the flakes being oriented in various directions. Therefore, the circularly polarized light A1R is visually recognized as backscattering light A2R. On the other hand, of the non-polarized light A1, counterclockwise circularly polarized light A1L is transmitted through the second layer 112, and the counterclockwise circularly polarized light A1L that has been transmitted through the second layer 112 is transmitted through the first layer 111. Furthermore, at a region where the third layer 113 is disposed on the first layer 111, the counterclockwise circularly polarized light A1L that has been transmitted through the first layer 111 is transmitted through the third layer 113.

When the first layer 111 on which the second layer 112 is not disposed is irradiated with the non-polarized light A1 from the second layer 112 side, the clockwise circularly polarized light A1R of the non-polarized light A1 is specularly reflected by the first layer 111, and becomes reflected light A3R. On the other hand, of the non-polarized light A1, the counterclockwise circularly polarized light A1L is transmitted through the first layer 111. Furthermore, at the region where the third layer 113 is disposed on the first layer 111, the counterclockwise circularly polarized light A1L that has been transmitted through the first layer 111 is transmitted through the third layer 113.

As shown in FIG. 12, when non-polarized light A1 such as natural light enters from the third layer 113 side, at least a portion of clockwise circularly polarized light A1R of the non-polarized light A1 is reflected by the flakes of the third layer 113. The flakes contained in the third layer 113 are generally dispersed with the flakes being oriented in various directions. Therefore, the circularly polarized light A1R is visually recognized as backscattering light A2R. On the other hand, of the non-polarized light A1, counterclockwise circularly polarized light A1L is transmitted through the third layer 113, and the counterclockwise circularly polarized light A1L that has been transmitted through the third layer 113 is transmitted through the first layer 111. Furthermore, at a region where the second layer 112 is disposed on the first layer 111, the counterclockwise circularly polarized light A1L that has been transmitted through the first layer 111 is transmitted through the second layer 112.

When the first layer 111 on which the second layer 113 is not disposed is irradiated with the non-polarized light A1 from the third layer 113 side, the clockwise circularly polarized light A1R of the non-polarized light A1 is specularly reflected by the first layer 111, and becomes reflected light A3R. On the other hand, of the non-polarized light A1, the counterclockwise circularly polarized light A1L is transmitted through the first layer 111. Furthermore, at the region where the second layer 112 is disposed on the first layer 111, the counterclockwise circularly polarized light that has been transmitted through the first layer 111 is transmitted through the second layer 112.

Therefore, when the identification medium is observed from the second layer 112 side, entering of the non-polarized light A1 from the second layer 112 side results in visual recognition of the backscattering light A2R at the region where the second layer 112 of the identification medium is disposed, and visual recognition of the reflected light A3R that is generated by specular reflection at the region where the second layer 112 is not disposed. Accordingly, an observer can visually recognize information of the second layer 112 from a difference between the backscattering light A2R and the

reflected light A3R. When the non-polarized light A1 enters from the third layer 113 side, the amount of the counterclockwise circularly polarized light A1L transmitted at the region where the third layer 113 is disposed is at the same level as that at the region where the third layer 113 is not disposed in the identification medium. Therefore, when the identification medium is observed from the second layer 112 side, the transmitted light A1L from the third layer 113 side does not influence the visibility of the information of the second layer 112, or even if it influences the visibility, the influence can be at a very low level. Specifically, the visual recognition of the information of the third layer 113 can be prevented.

In contrast, when the identification medium is observed from the third layer 113 side, entering of the non-polarized light A1 from the third layer 113 side results in visual recognition of the backscattering light A2R at the region where the third layer 113 of the identification medium is disposed, and visual recognition of the reflected light A3R that is generated by specular reflection at a region where the third layer 113 is not disposed. Accordingly, an observer can visually recognize the information of the third layer 113 from a difference between the backscattering light A2R and the reflected light A3R. When the non-polarized light A1 enters from the second layer 112 side, the amount of the counterclockwise circularly polarized light A1L transmitted at the region where the second layer 112 is disposed is at the same level as that at the region where the second layer 112 is not disposed in the identification medium. Therefore, when the identification medium is observed from the third layer 113 side, the transmitted light A1L from the second layer 112 side does not influence the visibility of the information of the third layer 113, or even if it influences the visibility, the influence can be at a very low level. Specifically, the visual recognition of the information of the second layer 112 can be prevented.

Since the volume-average particle diameter (D50) of the flakes contained in the second layer and the third layer is equal to or more than a specific value, according to the present embodiment, the identification medium allows for determination of authenticity without using a special viewer and has favorable visibility of front and back surfaces.

Furthermore, according to the present embodiment, information can be imparted to the second layer 112 and different information can be imparted to the third layer 113, and therefore the determination of authenticity can be more clearly performed, and an anti-counterfeit effect is improved.

Respective configurations of the identification medium according to the present embodiment and properties of the identification medium will be described.

(First layer and second layer)

The first layer and the second layer may be the same as those described in the sections of the first layer and the second layer of the identification medium according to the above-mentioned Embodiment 1.

(Third Layer)

The third layer is a layer disposed in a manner of overlapping with the first layer, and is a layer disposed directly on (i.e., in contact with) the first layer or indirectly (i.e., separated from the first layer by, e.g., having as another layer therebetween) in a manner of overlapping with the first layer. The third layer is preferably a layer disposed directly or indirectly on the surface of the first layer in a shape of a predetermined pattern.

The third layer is a layer capable of allowing transmission of circularly polarized light rotating in a direction opposite to the rotation direction of circularly polarized light that is reflected by the first layer. In other words, the second layer 12 is a layer that does not reflect or hardly reflects circularly polarized light rotating in the direction opposite to the rotation direction of circularly polarized light that is reflected by the first layer. Furthermore, the third layer is preferably a layer capable of reflecting at least a portion of circularly polarized light rotating in the same direction as the rotation direction of the circularly polarized light that is reflected by the first layer.

The third layer is a layer containing flakes of a resin having cholesteric regularity. The volume-average particle diameter (D50) of the flakes contained in the third layer is usually 70 μm or more, and preferably 75 μm or more, and is preferably 300 μm or less, more preferably 200 μm or less, and particularly preferably 150 μm or less. The flakes contained in the third layer may be appropriately selected from those described as the flakes used in the second layer in Embodiment 1 and used.

The material contained in the third layer, a production method, and properties of the third layer may be the same as those described in the sections of the second layer in Embodiment 1.

(Fourth layer and substrate layer)

As shown in FIGs. 13 and 14, the identification medium 100 may include a fourth layer 114b that is disposed so as to cover the third layer 113, if necessary. When the identification medium 100 includes the fourth layer 114b, the identification medium may preferably include a substrate layer 115b that is disposed on a surface of the fourth layer 114b opposite to the surface on the first layer 111 side.

FIG. 13 shows an example in which the identification medium 100 includes the fourth layer 114a that is disposed

so as to cover the second layer 112, and the substrate layer 115 that is disposed on the surface of the fourth layer 114a opposite to the first layer 111, and includes the fourth layer 114b that is disposed so as to cover the third layer 113, and the substrate layer 115b that is disposed on the surface of the fourth layer 114b opposite to the first layer 111.

As shown in FIG. 14, the identification medium 100 may include a fourth layer 114 that is disposed so as to cover the entirety of a layered body in which the second layer 112, the first layer 111, and the third layer 113 are layered in this order. In this case, it is preferable that the substrate layers 115a and 115b are disposed on both surfaces of the fourth layer 114.

In the present embodiment, the absolute value of a difference between the refractive index of a binder contained in the third layer and the refractive index of the fourth layer is preferably 0.2 or less, more preferably 0.1 or less, particularly preferably 0.05 or less, and ideally 0, and may be 0.001 or more. When the fourth layer in which the absolute value of the difference between the refractive index of the binder contained in the third layer and the refractive index of the fourth layer falls within the above-mentioned range is disposed, scattered light generated by an uneven surface of the third layer and reflection from an interface between the third layer and the fourth layer can be prevented, and the visibility of the identification medium can further be improved. Except for the above-mentioned points, the fourth layer and the substrate layer may be the same as those described in the sections of the fourth layer and the substrate layer of the identification medium according to Embodiment 1.

(Properties of identification medium)

With regard to the identification medium 100 according to the present embodiment, the ratio ($Ssf_3/s_3$) of $Ssf_3$ defined by the following formula (7) relative to $S_3$ defined by the following formula (6) is more than 0.7.
[Mathematical formula 3]

$$S_3 = \int_{400}^{780} \{(Rf_3(\lambda))*(Rf_3(\lambda))\}\text{^}(1/2)\cdot d\lambda \quad (6)$$

In the formula (6), $Rf_3(\lambda)$ represents a reflectance at the wavelength ($\lambda$) of the third layer. The $S_3$ value defined by the formula (6) is an integrated value of the reflectance $Rf_3$ of the third layer.
[Mathematical formula 4]

$$Ssf_3 = \int_{400}^{780} \{(Rs(\lambda))*(Rf_3(\lambda))\}\text{^}(1/2)\cdot d\lambda \quad (7)$$

The $Ssf_3$ value defined by the formula (7) is an integrated value of square root of product of the reflectance Rs of the first layer and the reflectance $Rf_3$ of the third layer at wavelengths of 400 nm to 780 nm.

$Rs(\lambda)$ and $Rf_3(\lambda)$ are a reflectance at a wavelength ($\lambda$) of a case wherein non-polarized light with a wavelength in 400 nm to 780 nm enters a layer of interest, and the reflectance may be measured with an ultraviolet-visible spectrophotometer (UV-Vis 550, manufactured by JASCO Corporation). The value measured with the above-mentioned device may include interface reflection, and therefore, in this case, the reflectances $Rs(\lambda)$ and $Rf_3(\lambda)$ are calculated by subtracting the amount of the interface reflection.

When $Ssf_3/S_3$ is more than 0.7, the information of the third layer can be visually recognized with the naked eye during observation of the identification medium from the third layer side, and the information of the third layer cannot be visually recognized during observation of the inverted identification medium from the second layer side. Therefore, this is effective for the determination of authenticity. The $Ssf_3/S_3$ value is preferably 0.75 or more, and more preferably 1.0 or more. When the $Ssf_3/S_3$ value is 1.0 or more, there is substantially no difference in determining whether visual identification is possible or impossible among observers, and objective determination can be performed. The upper limit value of the $Ssf_3/S_3$ value is not particularly limited, and may be preferably 5 or less, and more preferably 3 or less. When the $Ssf_3/S_3$ value falls within such a range, the character pattern of the third layer can be favorably visually recognized.

The wavelength of the reflected light from the first layer and the wavelength of the reflected light from the third layer are each usually in a visible light region, and there may or may not be a difference $\Delta E^*$ between the hue of the reflected light from the first layer and the hue of the reflected light from the third layer. When there is a difference $\Delta E^*$ between the hues, the value of the difference may be appropriately selected.

The wavelength of the reflected light from the second layer and the wavelength of the reflected light from the third layer are each in a visible light region. Although there may or may not be a difference ΔE* between the hue of the reflected light from the first layer and the hue of the reflected light from the third layer, the former is more preferable. The difference ΔE* between the hues is preferably 10 or more, more preferably 30 or more, and particularly preferably 50 or more. A difference ΔE* equal to or more than the lower limit value is preferable since a difference in the color of reflection between the second layer and the third layer can be easily confirmed by visual inspection, replication and counterfeiting of the identification medium can be made more difficult, and design based on a clear difference in color can be imparted. The upper limit of ΔE* may be set to, for example, 140.

The difference ΔE* between the hues can be quantitatively evaluated with a color difference meter. As a color system for quantitative evaluation, an optional system may be used. For example, an XYZ color system, an L*a*b* color system, or the like may be used.

The identification medium according to the present embodiment is preferably transparent or translucent. The transparency of the identification medium may be the same as the transparency of the identification medium according to Embodiment 1.

[Other embodiments]

In the above-mentioned embodiments, as the method for forming the second layer and the third layer, a method for printing a predetermined pattern (for example, a character pattern) with an ink containing flakes of a cholesteric resin is described. However, the method for forming the second layer and the third layer is not limited to this method. The second layer and the third layer may also be formed by a method for printing a pattern with an ink containing flakes, or a method of forming a layered shape from a dispersion containing flakes by, for example, a molding method such as an extrusion-molding method or a solvent casting method.

[Examples]

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature and normal pressure (23°C±2°C, 1 atmospheric pressure) in the atmospheric air, unless otherwise specified.

[Evaluation methods]

(Average refractive indices of cholesteric resin layer and flakes)

The refractive indices in four in-plane directions (x1, x2, x3, and x4) of a single layer of a cholesteric resin layer were measured, and the average refractive index was determined by calculating the arithmetic average of the obtained four refractive indices. Regarding the four in-plane directions x1, x2, x3, and x4, when x1 was a standard (0°), x2 was a direction of 45°, x3 was a direction of 90°, and x4 was a direction of 135°. As the conditions for measuring the average refractive index, a prism coupler (model 2010 manufactured by Metricon Corporation) was used, and a wavelength of 560 nm was used as a measurement wavelength under conditions of a temperature of 20°C±2°C and a humidity of 60±5%. The average refractive index of the cholesteric resin layer was 1.59. This value was regarded as the average refractive index of flakes of the cholesteric resin layer.

(Refractive indices of binder and tackiness layer)

A single layer was formed from each of the screen ink (binder) and the tackiness agent, and the refractive index at a wavelength of 560 nm thereof was measured using a prism coupler (model 2010 manufactured by Metricon Corporation) under conditions of a temperature of 20°C±2°C and a humidity of 60±5%.

(Measurement of volume-average particle diameter of flakes)

The coating material containing flakes was used as a sample. The volume-average particle diameter (D50) of the flakes was measured with a laser diffraction/scattering particle size distribution analyzer "LA-960V series" manufactured by Horiba, Ltd., based on a laser scattering and diffraction method. A particle diameter at a point where the cumulative frequency calculated from a small-diameter side in the obtained particle size distribution (by volume) reached 50% was

calculated. Furthermore, a particle diameter (D40) at a point where the cumulative frequency calculated from a small-diameter side (by volume) reached 40% was calculated.

(Calculation of area ratio of area of bottom surface relative to area of side surface of flakes)

The flakes were assumed to have a disk form, and the above-mentioned volume-average particle diameter (D50) of the flakes was assumed to be the diameter r of the bottom surface area of the disk. With these assumptions, the area of a bottom surface ($\pi(r/2)^2$) was calculated. The thickness (5.2 $\mu$m) of a cholesteric resin layer was assumed to be the thickness (height) L of the disk, and the area of a side surface ($\pi rL$) was calculated. From the obtained values, the area ratio of the area of one bottom surface relative to the area of the side surface of the flakes was calculated.

[Ratio of area of flake group per unit area of second layer]

The second layer (print layer) of the identification medium was observed with a digital microscope ("VHX-7000" manufactured by Keyence Corporation, followed by image analysis with the digital microscope. From the analysis results, the areas of the plurality of flakes existing per unit volume (1 $mm^2$) were measured, and the total value of the areas was determined. From the total value, the ratio of the area of the flake group per unit area of the second layer was calculated.

(Measurement of haze Hz)

The haze of the identification medium was measured using a turbidimeter ("NDH-2000" manufactured by Nippon Denshoku Industries Co., Ltd.).

(Evaluation of identification medium by observation)

For the identification medium, the following evaluations were performed by observation with the naked eye without using a viewer.

<Reflection observation I of identification medium>

As shown in FIG. 15, the identification medium was disposed on a black cloth 200 so that the first layer 11 faced the black cloth 200. Subsequently, reflected light A7 (circularly polarized light) from the second layer 12 was observed from the second layer 12 side of the identification medium under an illuminance of 650 lx (under irradiation with non-polarized light A6). The results were evaluated according to the following criteria. In the evaluation of reflection observation I, high evaluation in visibility of the reflected light A7 from the second layer is preferable.

<Reflection observation II of identification medium>

As shown in FIG. 16, the identification medium was disposed on the black cloth 200 so that the second layer faced the black cloth 200. Subsequently, reflected light A8 (circularly polarized light) from the second layer 12 was observed from the first layer 11 side of the identification medium under an illuminance of 650 lx (under irradiation with non-polarized light A6). The results were evaluated according to the following criteria. In the evaluation of reflection observation II, high evaluation in non-visibility of the reflected light A8 from the second layer is preferable.

<Transmission observation of identification medium>

As shown in FIG. 17, the identification medium was irradiated with non-polarized light A6 with an illuminance of 650 lx from the second layer side of the identification medium, and transmitted light A9 (circularly polarized light) through the second layer 12 was observed from the first layer 11 side. The results were evaluated according to the criteria of the reflection evaluation I described above. The results were evaluated according to the following criteria. In the evaluation of transmission observation, high evaluation in non-visibility of the reflected light A8 from the second layer is preferable.

The results of the evaluations of reflection observations I and II and the evaluation of transmission observation were evaluated according to the following criteria.

1. Sufficiently visible. In the reflection observation I, the second layer was clearly visually recognized from the second layer side, or in the reflection observation II and the transmission observation, the second layer was clearly visually recognized through the first layer from the first layer side.
2. Visible. In the reflection observation I, the second layer was visually recognized from the second layer side, or in the

reflection observation II and the transmission observation, the second layer was visually recognized through the first layer from the first layer side.

3. Slightly visible. In the reflection observation I, the second layer was slightly visually recognized from the second layer side, or in the reflection observation II and the transmission observation, the second layer was slightly visually recognized through the first layer from the first layer side.

4. Hardly visible. In the reflection observation I, the second layer was hardly visually recognized from the second layer side, or in the reflection observation II and the transmission observation, the second layer was hardly visually recognized through the first layer from the first layer side.

5. Not visible. In the reflection observation I, the second layer was completely visually unrecognized from the second layer side, or in the reflection observation II and the transmission observation, the second layer was completely visually unrecognized through the first layer from the first layer side.

[Description of reagents]

Reagents used in Examples and Comparative Examples are as follows.

As the photopolymerizable liquid crystal compound, a compound (X1) having the following structure was used.

[Chemical formula 5]

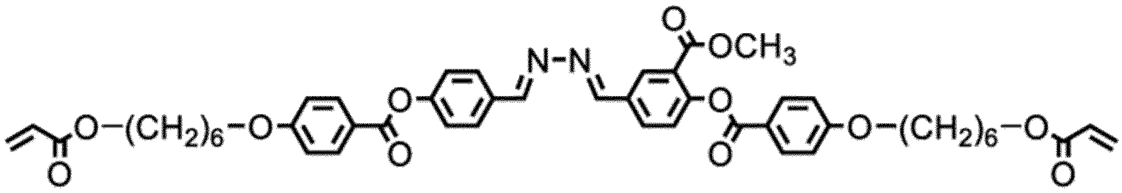

(X1)

As the photopolymerizable non-liquid crystal compound, a compound (X2) having the following structure was used.

[Chemical formula 6]

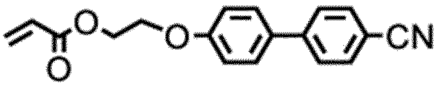

(X2)

As the chiral agent, "LC756" manufactured by BASF was used.

As the photopolymerization initiator, "Irgacure OXEO2" manufactured by Ciba Japan KK was used.

As the surfactant, "Ftergent 209F" manufactured by NEOS Co., Ltd., was used.

[1. Production of cholesteric resin layer]

A cholesteric resin layer used in production of identification mediums in Examples and Comparative Examples was produced using a photocurable liquid crystal composition prepared by a method described below. The cholesteric resin layer was used as a first layer in some cases, and was pulverized into flakes and used as a pigment of a coating material for forming a second layer in some other cases.

(Preparation of photocurable liquid crystal composition)

A photocurable liquid crystal composition was prepared by mixing 21.9 parts of the photopolymerizable liquid crystal compound, 5.47 parts of the photopolymerizable non-liquid crystal compound, 1.69 parts of the chiral agent, 0.9 part of the photopolymerizable initiator, 0.03 part of the surfactant, and 70 parts of cyclopentanone.

(Production of cholesteric resin layer)

As a supporting body, a long-length polyethylene terephthalate film being isotropic in terms of in-plane refractive

index ("PET film A4100" manufactured by Toyobo Co., Ltd.; thickness: 100 μm, hereinafter referred to as a "PET film") was prepared. This PET film was set in a feeder of a film conveying device, and the following operation was performed while the PET film was conveyed in a long-length direction. First, a rubbing treatment was performed in the long-length direction parallel to the conveying direction. Subsequently, the prepared liquid crystal composition was applied onto the rubbing-treated surface using a die coater. As a result, an uncured film of the liquid crystal composition was formed on one surface of the PET film. The uncured film of the liquid crystal composition was subjected to an orientation treatment at 120°C for 4 minutes.

The film after the orientation treatment was subjected to a first ultraviolet irradiation treatment (illuminance: 5 $mJ/cm^2$, 1 minute), a first heating treatment (100°C, 1 minute), a second ultraviolet irradiation treatment (illuminance: 30 $mJ/cm^2$, 1 minute), and a second heating treatment (100°C, 1 minute), and the film of the liquid crystal composition was then irradiated with ultraviolet light of 800 $mJ/cm^2$ in a nitrogen atmosphere, to completely cure the film of the liquid crystal composition. As a result, a multilayer film including a cholesteric resin layer with a thickness of 5.2 μm on one surface of the long-length PET film was obtained. Subsequently, the PET film was peeled from the multilayer film to obtain the cholesteric resin layer as a single layer film.

[2. Production of coating material using flakes]

Using the multilayer film including the cholesteric resin layer produced by the above-mentioned procedure, a peel piece of the cholesteric resin layer was produced. As an apparatus for producing the peel piece, an apparatus shown in FIG. 18 was used. FIG. 18 is a side view schematically illustrating the apparatus for producing the peel piece of the cholesteric resin layer.

As shown in FIG. 18, a production apparatus 400 including a film feeder 420, a peel unit 430, and a film collecting unit 440 was prepared. The peel unit 430 included a bar 434 having a corner portion 435 formed at an acute angle and a nozzle 436 disposed immediately downstream of the corner portion 435 and capable of spraying air. The angle of the corner portion 435 of the bar 434 was set so that a multilayer film 410 was folded at an angle θ (45°). The corner portion had a chamfered structure with R of 0.2 mm to 0.3 mm.

The multilayer film 410 was set in the film feeder 420 in such a direction that the multilayer film 410 was folded at the corner portion 435 of the bar 434 in a manner wherein with a cholesteric resin layer 411 faced outward rather than the PET film 412. The multilayer film 410 was fed from the film feeder 420 with a tension in the conveying direction being applied to the multilayer film 410 by the film collecting unit 440. At that time, the magnitude of the tension applied to the multilayer film 410 was set to 80 N/m. Air was sprayed from the nozzle 436 at a pressure of 0.5 MPa.

The multilayer film 410 was folded at the corner portion 435 of the bar 434, and many cracks were generated. After that, the cholesteric resin layer 411 having the generated cracks was peeled and blown by air sprayed from the nozzle 436, to obtain peel pieces 411A. The obtained peel pieces 411A were collected by a collecting device.

(Production of flakes)

The collected peel piece of the cholesteric resin layer was pulverized with a mill-stone-type pulverizer ("Micro powder MPW-G008" manufactured by West Corporation), to obtain flakes. The obtained flakes were classified a plurality of times with a fine classifier ("TURBO SCREENER TS125×200" manufactured by Freund Corporation) into 51 μm, 60 μm, and 100 μm, to obtain flakes A to G listed in Table 1 described below.

Table 1. Flake volume-average particle diameter

| Flake | D40 (μm) | D50(μm) | Top surface/side surface area ratio |
|---|---|---|---|
| A | 23 | 25.83 | 0.84 |
| B | 34 | 40.25 | 0.90 |
| C | 60 | 67.72 | 1.47 |
| D | 71 | 78.37 | 1.78 |
| E | 85 | 94.38 | 2.25 |
| F | 108 | 121.42 | 2.61 |
| G | 131 | 150.31 | 2.47 |

(Production of coating material)

Using the obtained flakes A to G as a cholesteric resin layer pigment, coating materials A1 to G1 and A2 to G2 were produced by the following methods. The coating materials A1 to G1 were produced by mixing 10 parts of a screen ink ("S240-800" manufactured by Seiko Advance Ltd., refractive index: 1.49) as a binder solution (medium), 0.5 part of a dilution solvent ("T472" manufactured by Seiko advance Ltd.), and 0.5 part of the aforementioned flakes. The coating materials A2 to G2 were produced by mixing 10 parts of the screen ink, 0.5 part of the dilution solvent, and 1 part of the aforementioned flakes.

[3. Production of tackiness layer]

In accordance with a method described in Reference Example 1 of International publication WO2014/077267, 25 parts of styrene, 50 parts of isoprene, and 25 parts of styrene were polymerized in this order, to produce a triblock copolymer hydrogenated product (ia1) (weight-average molecular weight (Mw) = 48,200; molecular weight distribution Mw/Mn = 1.04; hydrogenation rate of a carbon-carbon unsaturated bond in a main chain and a side chain and a carbon-carbon unsaturated bond in an aromatic ring is approximately equal to 100%). Furthermore, in accordance with a method described in Reference Example 1 of International publication WO2014/077267, 1.8 parts of vinyltrimethoxysilane was bonded to 100 parts of the triblock copolymer hydrogenated product (ia1), to produce pellets of alkoxysilyl modified product (ia1-s) of the triblock copolymer hydrogenated product.

A tackiness layer (hotmelt layer) was produced by the following method with a twin-screw extruder ("TEM-37B" manufactured by Toshiba Machine Co., Ltd.) equipped with a side feeder and a T die having a width of 400 mm, and a sheet drawing apparatus equipped with a cast roll and a release film feeding device.

The alkoxysilyl modified product (ia1-s) was supplied to the twin-screw extruder. Hydrogenated polybutene ("PARLEAM (registered trademark) 24" manufactured by NOF Corporation) was continuously supplied from the side feeder such that the proportion of the hydrogenated polybutene was 20 parts relative to 100 parts of the alkoxysilyl modified product (ia1-s), to obtain a molten resin containing the alkoxysilyl modified product (ia1-s) and the hydrogenated polybutene. The molten resin was extruded from the T die on the cast roll and molded into a film shape. The extruding was performed under molding conditions of a molten resin temperature of 180°C, a T die temperature of 180°C, and a cast roll temperature of 40°C. The extruded molten resin was cooled on the cast roll, to obtain a tackiness layer having a thickness of 100 μm. The heat softening temperature of the alkoxysilyl modified product (ia1-s) was 89°C.

A release PET film (thickness: 50 μm) was supplied to a surface of the tackiness layer extruded on the cast roll, and the tackiness layer and the PET film were layered and wound into a roll, and collected. As a result, a roll of a multilayer film including the tackiness layer and the PET film was obtained.

[Example 1]

One surface of the cholesteric resin layer was subjected to screen printing with the coating material G1 containing the flakes G. As a plate for screen printing, an 80-mesh screen with a character pattern was prepared. Characters "ABCD" were printed as shown in FIGs. 1 and 2. Subsequently, a layered body including the cholesteric resin layer and the print layer was heated on a hot plate at 80°C for 10 minutes, to dry the coating material, and as a result, an identification medium was obtained. The obtained identification medium was evaluated by the above-mentioned evaluation methods. In Example 1, the evaluation was performed with the print layer being exposed.

[Example 2]

In the same manner as in Example 1, a layered body including the cholesteric resin layer and the print layer was formed, and the coating material was dried. Subsequently, the tackiness layer of the multilayer film including the tackiness layer and the PET film was disposed on the print layer, and the PET film was then peeled, to transfer the tackiness layer on the print layer. Subsequently, a float glass plate having a thickness of 0.4 mm (glass substrate, haze value: 0.4%) was disposed on the tackiness layer. The layered body in which the cholesteric resin layer, the print layer, the tackiness layer, and the glass substrate were layered in this order and a sediment were placed into a vacuum packaging bag, and packaged in vacuum, to obtain a packaged product. The packaged product was placed in an autoclave and kept under heating and pressurization conditions, whereby the layers were bonded to each other. The bonding conditions were 110°C, 0.2 MPa, and 15 minutes. The obtained identification medium was evaluated by the above-mentioned evaluation methods.

[Examples 3 to 15 and Comparative Examples 1 to 12]

For Examples 3, 5, 7, 9, 11, and 13 and Comparative Examples 1, 3, 5, 9, and 11, identification media were produced by the same operations as those in Example 1 except that a coating material containing flakes (flakes A to F) listed in Table 2 was used instead of the coating material G1 containing the flakes G. Furthermore, the identification media were evaluated by the above-mentioned evaluation methods.

Furthermore, for Examples 4, 6, 8, 10, 12, 14, and 15 and Comparative Examples 2, 4, 6, 8, 10, and 12, identification media were produced by the same operations as those in Example 2 except that a coating material containing flakes (flakes A to F) listed in Table 2 was used instead of the coating material G1 containing the flakes G. Furthermore, the identification media were evaluated by the above-mentioned evaluation methods.

The identification media of Examples 3 to 15 and Comparative Examples 1 to 12 were all translucent.

The configurations of the identification media of Examples 3 to 15 and Comparative Examples 1 to 12 are shown in Table 2, and the evaluation results are shown in Table 3. In Tables 2 and 3, abbreviations refer to the following terms.

D50 (μm): Volume-average particle diameter of flakes )
Top surface/side surface area ratio: Ratio of area of one bottom surface to area of side surface of flakes
Area ratio: ratio of area of flake group per unit area of second layer
Reflection observation I: evaluation of the identification medium by Reflection observation I
Reflection observation II: evaluation of identification medium by Reflection observation II
Transmission observation: evaluation of identification medium by transmission observation

Table 2

| | Flake | | | Coating material | Layer configuration | | | |
|---|---|---|---|---|---|---|---|---|
| | Type | D50 (μm) | Top surface/side surface area ratio | Type | First layer | Second layer | Fourth layer (tackiness layer) | Substrate layer |
| Ex. 1 | G | 150 | 2.47 | G1 | Present | Present | - | - |
| Ex. 2 | G | 150 | 2.47 | G1 | Present | Present | Present | Present |
| Ex. 3 | G | 150 | 2.47 | G2 | Present | Present | - | - |
| Ex. 4 | G | 150 | 2.47 | G2 | Present | Present | Present | Present |
| Ex. 5 | F | 121 | 2.61 | F1 | Present | Present | - | - |
| Ex. 6 | F | 121 | 2.61 | F1 | Present | Present | Present | Present |
| Ex. 7 | F | 121 | 2.61 | F2 | Present | Present | - | - |
| Ex. 8 | F | 121 | 2.61 | F2 | Present | Present | Present | Present |
| Ex. 9 | E | 94 | 2.25 | E1 | Present | Present | - | - |
| Ex. 10 | E | 94 | 2.25 | E1 | Present | Present | Present | Present |
| Ex. 11 | E | 94 | 2.25 | E2 | Present | Present | - | - |
| Ex. 12 | E | 94 | 2.25 | E2 | Present | Present | Present | Present |
| Ex. 13 | D | 78 | 1.78 | D1 | Present | Present | - | - |
| Ex. 14 | D | 78 | 1.78 | D1 | Present | Present | Present | Present |
| Ex. 15 | D | 78 | 1.78 | D2 | Present | Present | Present | Present |
| Comp. Ex. 1 | C | 68 | 1.47 | C1 | Present | Present | - | - |
| Comp. Ex. 2 | C | 68 | 1.47 | C1 | Present | Present | Present | Present |
| Comp. Ex. 3 | C | 68 | 1.47 | C2 | Present | Present | - | - |
| Comp. Ex. 4 | C | 68 | 1.47 | C2 | Present | Present | Present | Present |

(continued)

| | Flake | | | Coating material | Layer configuration | | | |
|---|---|---|---|---|---|---|---|---|
| | Type | D50 (μm) | Top surface/side surface area ratio | Type | First layer | Second layer | Fourth layer (tackiness layer) | Substrate layer |
| Comp. Ex. 5 | B | 40 | 0.9 | B1 | Present | Present | - | - |
| Comp. Ex. 6 | B | 40 | 0.9 | B1 | Present | Present | Present | Present |
| Comp. Ex. 7 | B | 40 | 0.9 | B2 | Present | Present | - | - |
| Comp. Ex. 8 | B | 40 | 0.9 | B2 | Present | Present | Present | Present |
| Comp. Ex. 9 | A | 26 | 0.8 | A1 | Present | Present | - | - |
| Comp. Ex. 10 | A | 26 | 0.8 | A1 | Present | Present | Present | Present |
| Comp. Ex. 11 | A | 26 | 0.8 | A2 | Present | Present | - | - |
| Comp. Ex. 12 | A | 26 | 0.8 | A2 | Present | Present | Present | Present |

Table 3

| | Flake evaluation | | Constituent layer evaluation | | | Identification medium evaluation | | | |
|---|---|---|---|---|---|---|---|---|---|
| | Flake area ratio in second layer | Flake average refractive index | Second layer binder refractive index | Fourth layer refractive index | Substrate layer Hz(%) | HZ (%) | reflection observation I | reflection observation II | Transmission observation |
| Ex. 1 | 21.2 | 1.59 | 1.49 | - | - | 7 | 2 | 5 | 4 |
| Ex. 2 | 21.2 | 1.59 | 1.49 | 1.50 | 0.4 | 5 | 2 | 5 | 5 |
| Ex. 3 | 38.7 | 1.59 | 1.49 | - | - | 9 | 1 | 5 | 4 |
| Ex. 4 | 38.7 | 1.59 | 1.49 | 1.50 | 0.4 | 7 | 1 | 5 | 5 |
| Ex. 5 | 23.5 | 1.59 | 1.49 | - | - | 8 | 2 | 5 | 4 |
| Ex. 6 | 23.5 | 1.59 | 1.49 | 1.50 | 0.4 | 5 | 2 | 5 | 5 |
| Ex. 7 | 45.4 | 1.59 | 1.49 | - | - | 9 | 1 | 5 | 4 |
| Ex. 8 | 45.4 | 1.59 | 1.49 | 1.50 | 0.4 | 6 | 1 | 5 | 5 |
| Ex. 9 | 26.6 | 1.59 | 1.49 | - | - | 8 | 2 | 5 | 4 |
| Ex. 10 | 26.6 | 1.59 | 1.49 | 1.50 | 0.4 | 5 | 2 | 5 | 5 |
| Ex. 11 | 48.8 | 1.59 | 1.49 | - | - | 9 | 1 | 5 | 4 |
| Ex. 12 | 48.8 | 1.59 | 1.49 | 1.50 | 0.4 | 6 | 1 | 5 | 5 |
| Ex. 13 | 35.6 | 1.59 | 1.49 | - | - | 9 | 2 | 5 | 4 |
| Ex. 14 | 35.6 | 1.59 | 1.49 | 1.50 | 0.4 | 8 | 2 | 5 | 5 |
| Ex. 15 | 59.2 | 1.59 | 1.49 | 1.50 | 0.4 | 11 | 1 | 5 | 4 |
| Comp. Ex. 1 | 30.5 | 1.59 | 1.49 | - | - | 16 | 2 | 5 | 2 |
| Comp. Ex. 2 | 30.5 | 1.59 | 1.49 | 1.50 | 0.4 | 14 | 2 | 5 | 3 |
| Comp. Ex. 3 | 60.9 | 1.59 | 1.49 | - | - | 20 | 1 | 5 | 2 |

(continued)

| | Flake evaluation | | Constituent layer evaluation | | | Identification medium evaluation | | | |
|---|---|---|---|---|---|---|---|---|---|
| | Flake area ratio in second layer | Flake average refractive index | Second layer binder refractive index | Fourth layer refractive index | Substrate layer Hz(%) | HZ (%) | reflection observation I | reflection observation II | Transmission observation |
| Comp. Ex. 4 | 60.9 | 1.59 | 1.49 | 1.50 | 0.4 | 15 | 1 | 5 | 3 |
| Comp. Ex. 5 | 20.4 | 1.59 | 1.49 | - | - | 30 | 2 | 5 | 2 |
| Comp. Ex. 6 | 20.4 | 1.59 | 1.49 | 1.50 | 0.4 | 28 | 2 | 5 | 2 |
| Comp. Ex. 7 | 40.7 | 1.59 | 1.49 | - | - | 35 | 1 | 5 | 2 |
| Comp. Ex. 8 | 40.7 | 1.59 | 1.49 | 1.50 | 0.4 | 33 | 1 | 5 | 2 |
| Comp. Ex. 9 | 18.3 | 1.59 | 1.49 | - | - | 36 | 2 | 5 | 1 |
| Comp. Ex. 10 | 18.3 | 1.59 | 1.49 | 1.50 | 0.4 | 33 | 2 | 5 | 1 |
| Comp. Ex. 11 | 38.2 | 1.59 | 1.49 | - | - | 60 | 1 | 5 | 1 |
| Comp. Ex. 12 | 38.2 | 1.59 | 1.49 | 1.50 | 0.4 | 56 | 1 | 5 | 1 |

[Results]

In Examples 1 to 15 in which the volume-average particle diameter of the flakes in the second layer was 70 μm or more, it was confirmed that the visibilities of front and back surfaces of the identification media were improved. In contrast, in Comparative Examples 1 to 12 in which the volume-average particle diameter of the flakes in the second layer was less than 70 μm, it was confirmed that the second layer was seen from the first layer side through the first layer, and the visibilities of the front and back surfaces of the identification media were decreased.

Reference Sign List

10,100 identification medium
11,111 first layer
12,112 second layer
12F,112F,113F flake
14,114a,114b fourth layer
15,115a,115b substrate layer
113 third layer
200 black cloth
400 apparatus for producing peel piece of a cholesteric resin layer
410 multilayer film
411 cholesteric resin layer
412 supporting body (PET film)
411A peel piece
420 film feeder
430 peel unit

434 bar
435 corner portion of bar
436 nozzle
440 film collecting unit

## Claims

1. An identification medium comprising: a first layer; and a second layer disposed thereon in a manner of overlapping with the first layer, wherein:

   the first layer is a layer capable of reflecting one of clockwise circularly polarized light and counterclockwise circularly polarized light and of allowing transmission of the other circularly polarized light, and includes a layer of a resin having cholesteric regularity;
   the second layer is a layer capable of reflecting at least a portion of circularly polarized light rotating in a same direction as a rotation direction of the circularly polarized light that is reflected by the first layer and of allowing transmission of the circularly polarized light rotating in a direction opposite to the rotation direction of the circularly polarized light that is reflected by the first layer, and is a layer containing flakes of a resin having cholesteric regularity; and
   a volume-average particle diameter (D50) of the flakes contained in the second layer is 70 μm or more.

2. The identification medium according to claim 1, comprising a third layer disposed on a surface of the first layer opposite to a surface on which the second layer is disposed in a manner of overlapping with the first layer, wherein

   the third layer is a layer capable of allowing transmission of circularly polarized light rotating in a direction opposite to the rotation direction of the circularly polarized light that is reflected by the first layer, and is a layer containing flakes of a resin having cholesteric regularity, and
   a volume-average particle diameter (D50) of the flakes contained in the third layer is 70 μm or more.

3. The identification medium according to claim 1, wherein a ratio of an area of one bottom surface relative to an area of a side surface (bottom surface area / side surface area) of the flakes having cholesteric regularity is 1.5 or more.

4. The identification medium according to claim 1, wherein a ratio of an area of a flake group per unit area of the layer containing the flakes of the resin having cholesteric regularity is less than 60%.

5. The identification medium according to claim 1, wherein the layer containing the flakes of the resin having cholesteric regularity contains a binder, and an absolute value of a difference between an average refractive index of the flake and a refractive index of the binder is 0.2 or less.

6. The identification medium according to claim 5, comprising a fourth layer that covers the second layer, wherein the second layer contains the binder, and an absolute value of a difference between a refractive index of the binder contained in the second layer and a refractive index of the fourth layer is 0.2 or less.

7. The identification medium according to claim 5, comprising a third layer disposed on a surface of the first layer opposite to a surface on which the second layer is disposed thereon in a manner of overlapping with the first layer, wherein

   the third layer is a layer capable of allowing transmission of circularly polarized light rotating in a direction opposite to the rotation direction of circularly polarized light that is reflected by the first layer, and is a layer containing flakes of a resin having cholesteric regularity,
   a volume-average particle diameter (D50) of the flakes contained in the third layer is 70 μm or more,
   the identification medium comprises a fourth layer that covers the third layer, and the third layer contains the binder, and an absolute value of a difference between a refractive index of the binder contained in the third layer and a refractive index of the fourth layer is 0.2 or less.

8. The identification medium according to claim 6 or 7, comprising a substrate layer provided on a surface of the fourth layer opposite to a surface on the first layer side, a haze of the substrate layer being 1.0% or less.

FIG.1

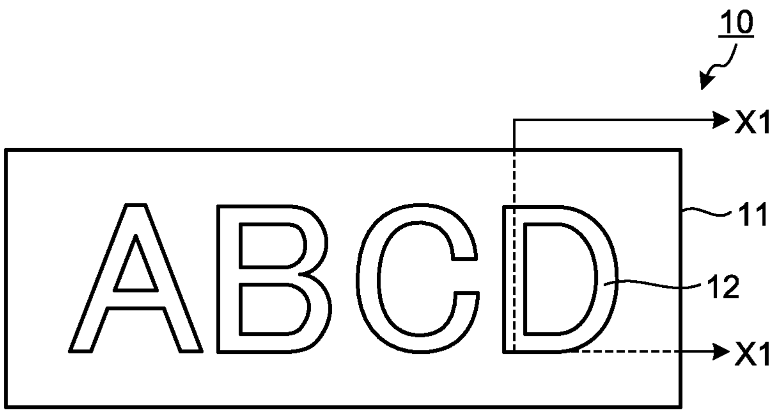


FIG.2

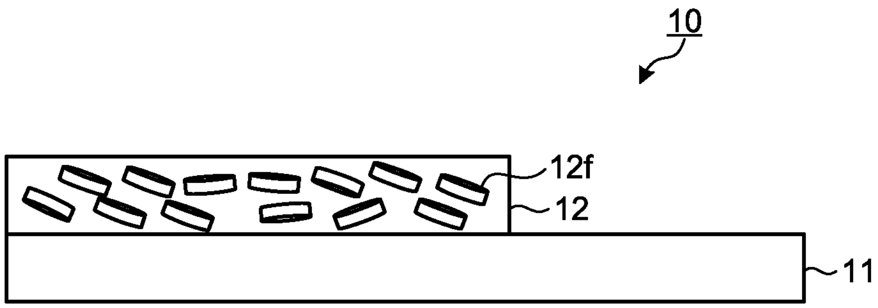

FIG.3

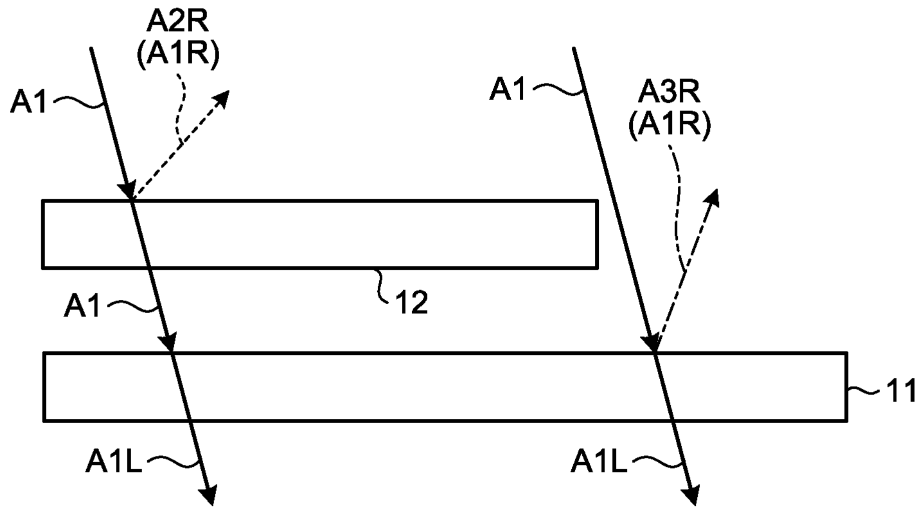
A2R
(A1R)
A1
A1
A3R
(A1R)
A1
12
11
A1L
A1L

FIG.4

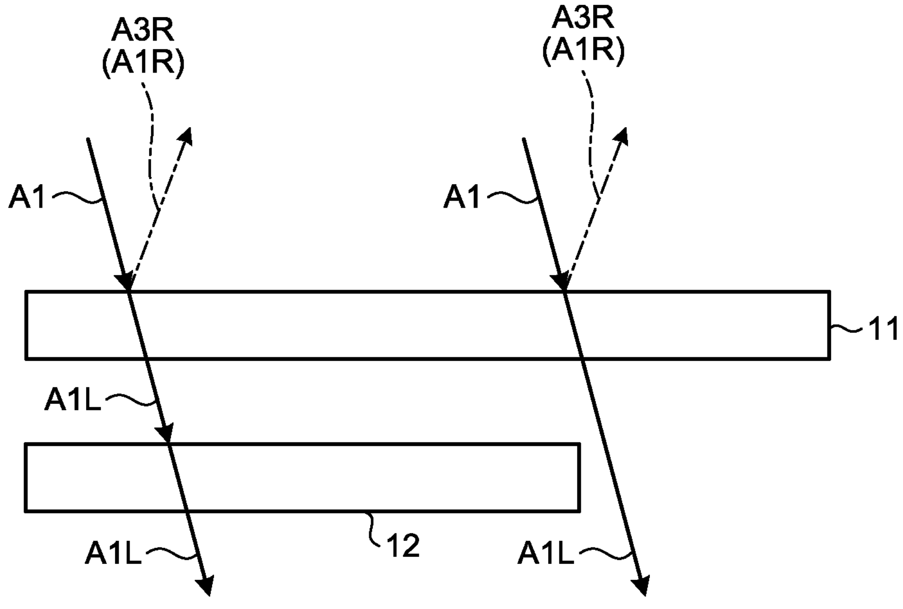
A3R
(A1R)
A3R
(A1R)
A1
A1
11
A1L
12
A1L
A1L

FIG.5

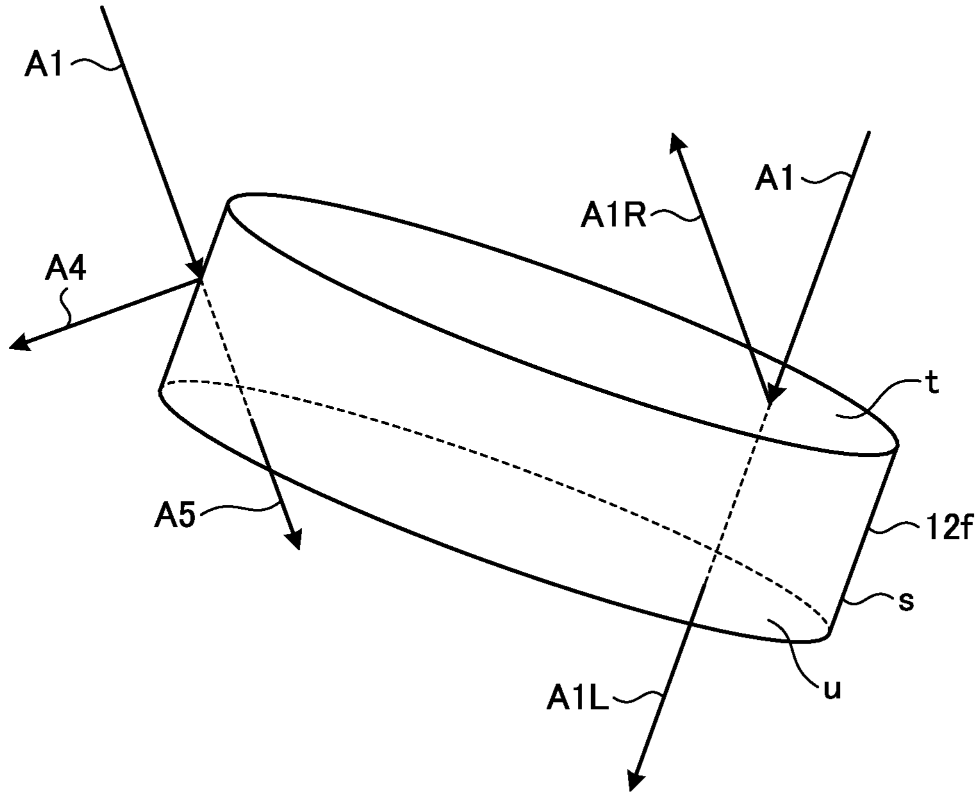


FIG.6

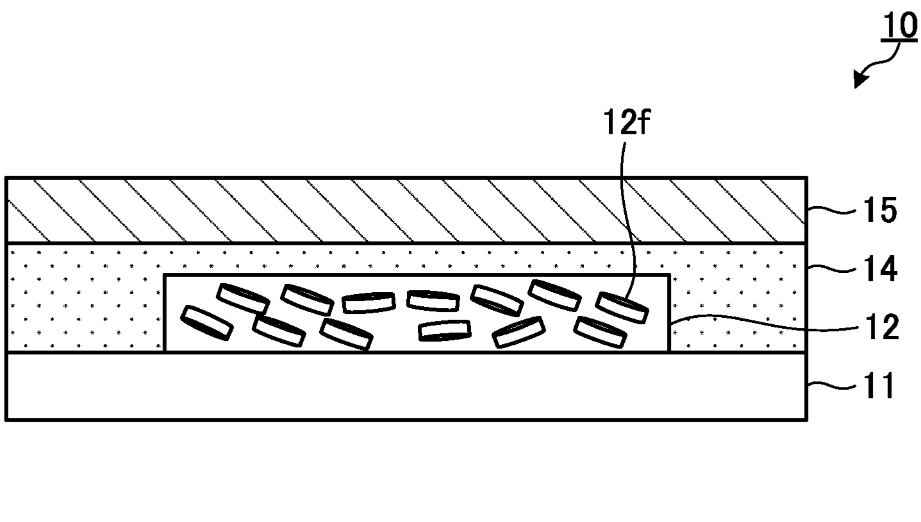

FIG.7

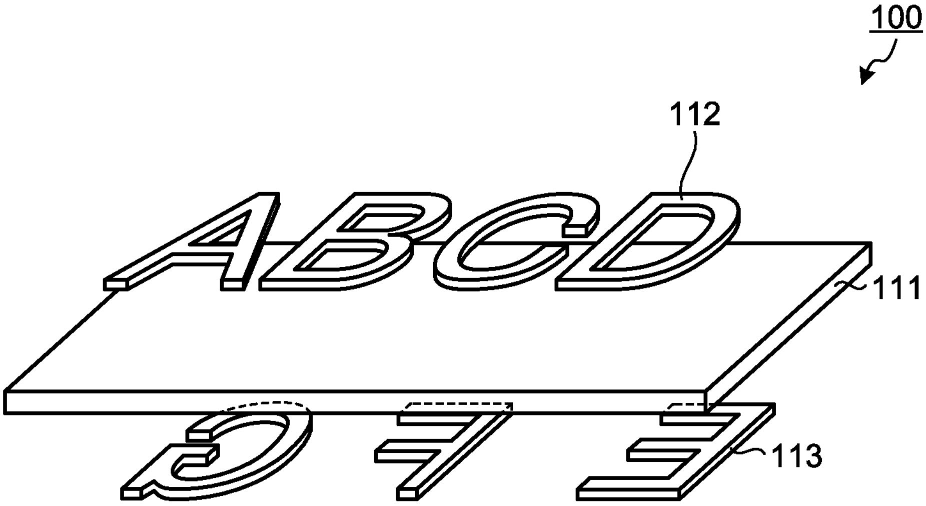


FIG.8

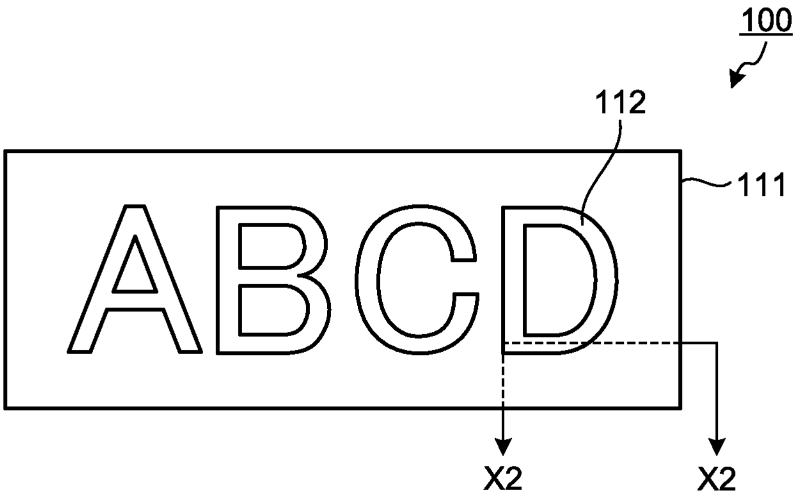

FIG.9

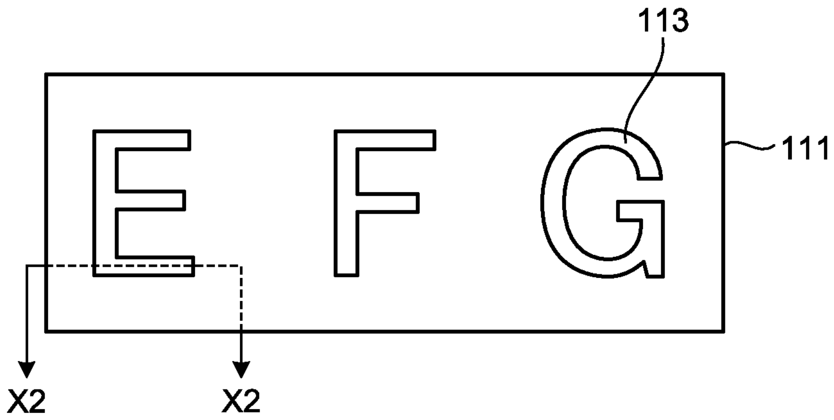


FIG.10

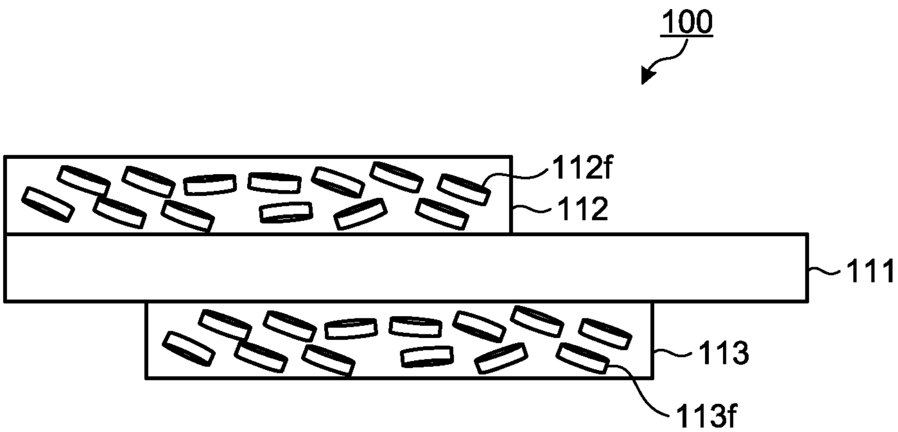

FIG.11

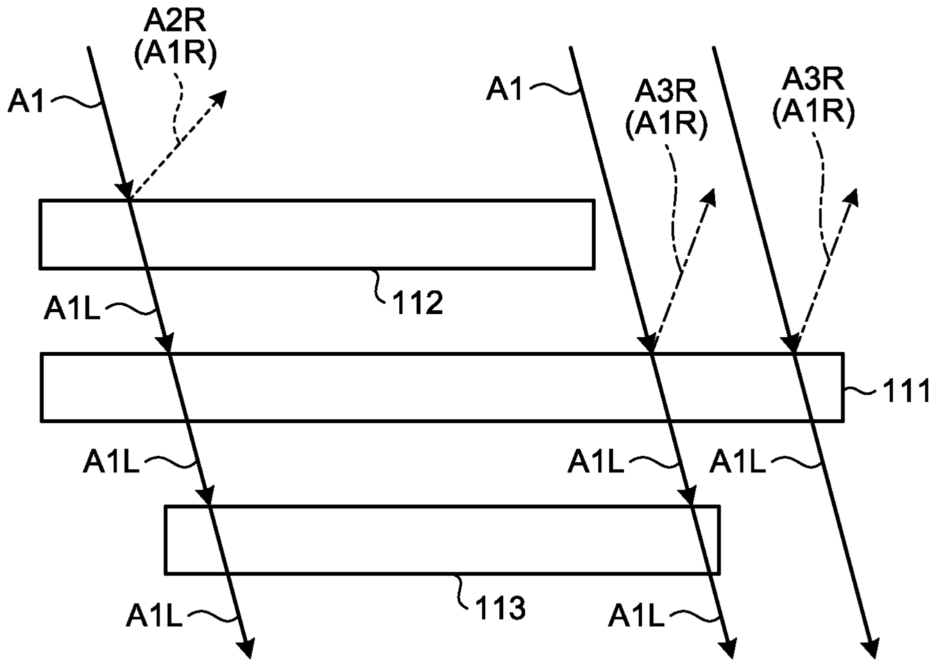
A2R
(A1R)
A1
A1
A3R
(A1R)
A3R
(A1R)
112
A1L
111
A1L
A1L
A1L
113
A1L
A1L

FIG.12

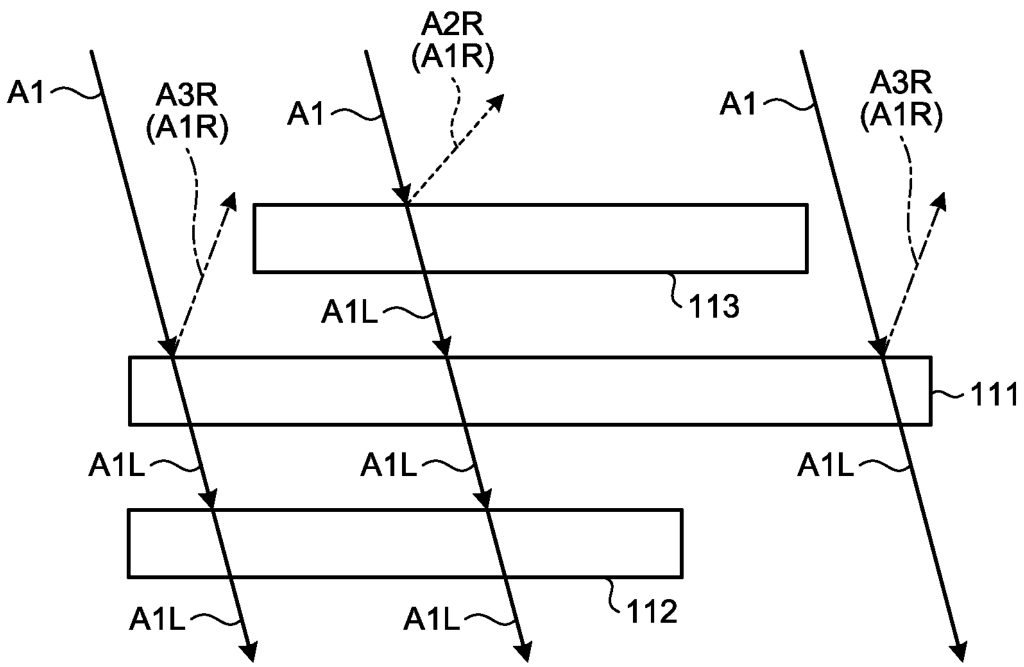
A2R
(A1R)
A1
A3R
(A1R)
A1
A1
A3R
(A1R)
113
A1L
111
A1L
A1L
A1L
112
A1L
A1L

FIG.13

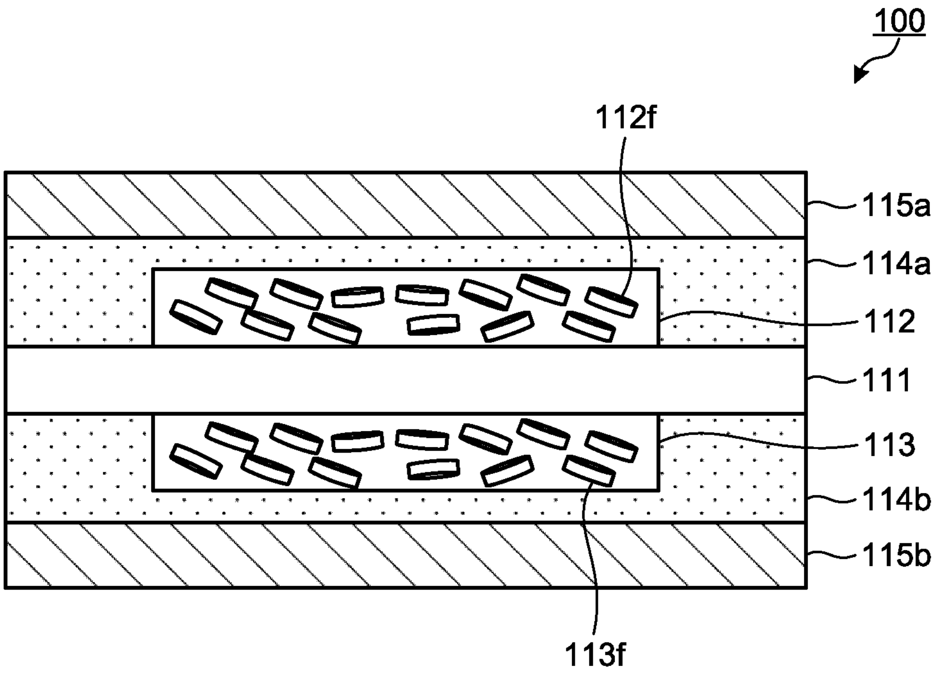
100
112f
115a
114a
112
111
113
114b
115b
113f

FIG.14

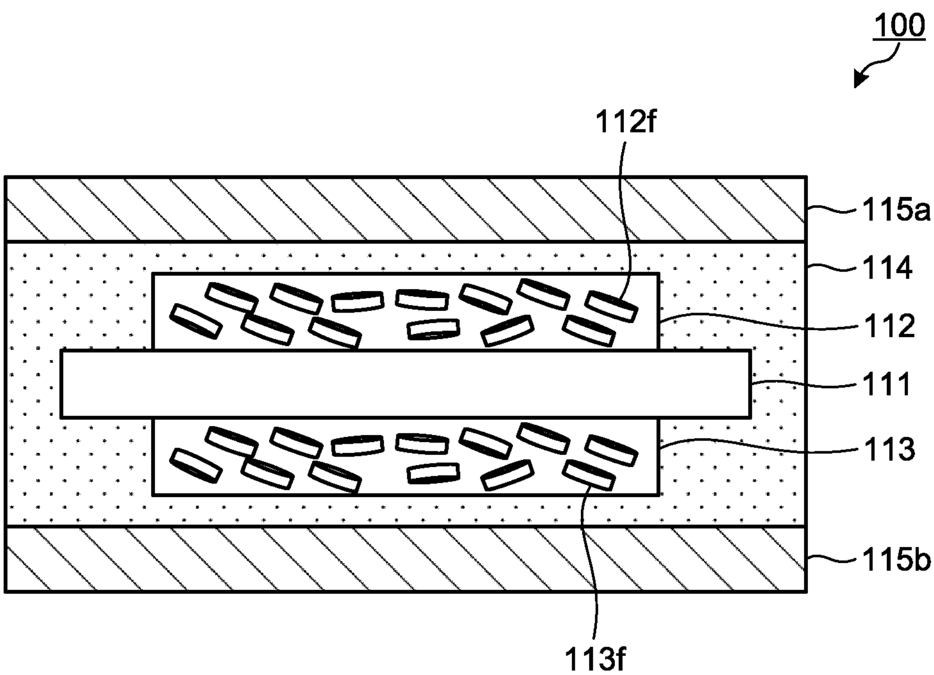
100
112f
115a
114
112
111
113
115b
113f

FIG.15

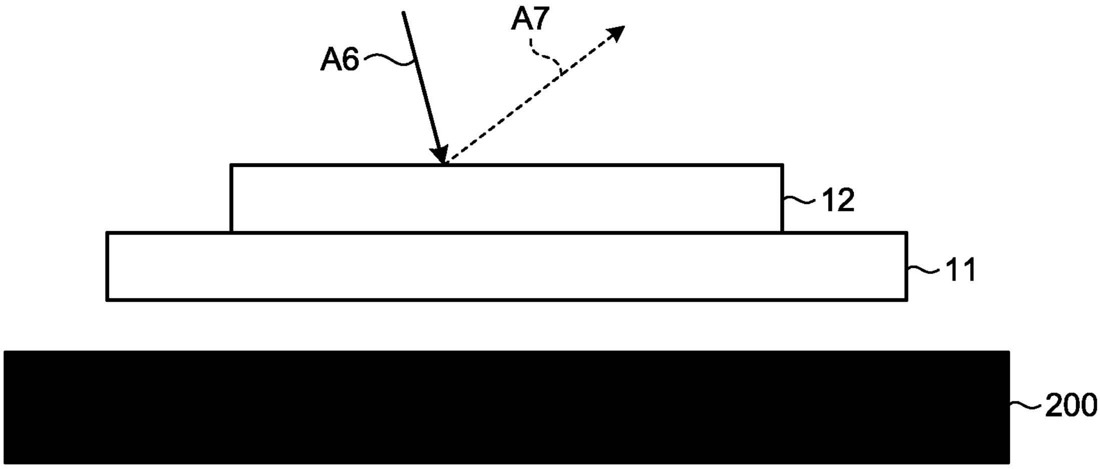


FIG.16

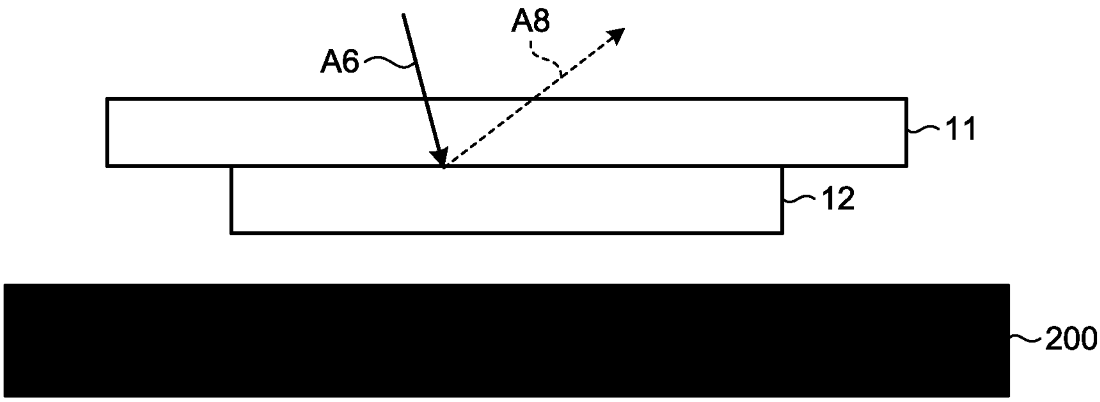

FIG.17

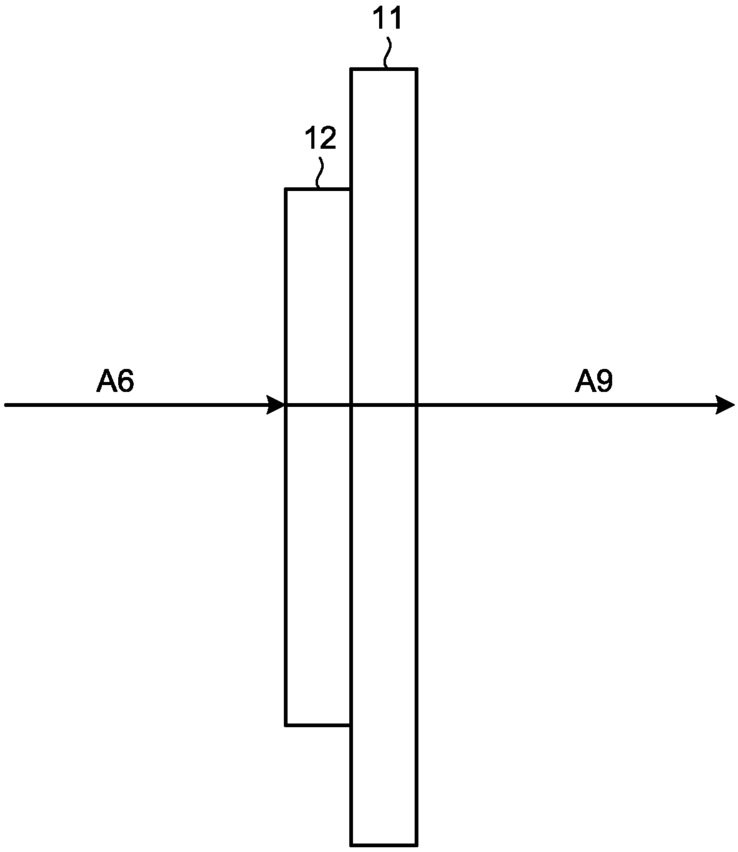


FIG.18

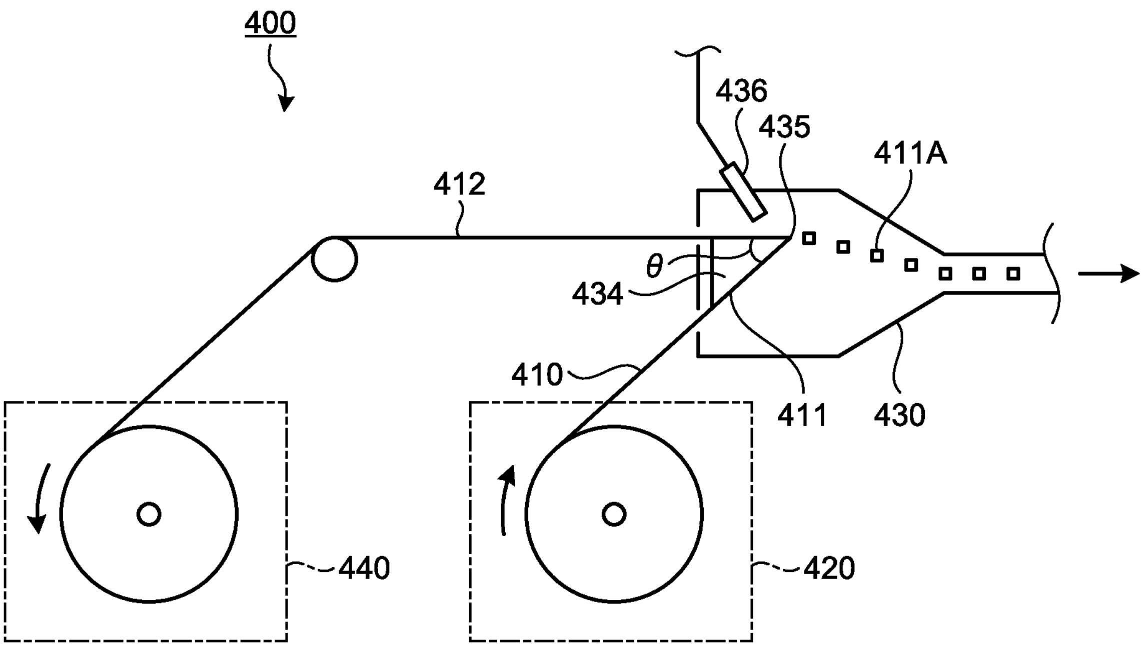

## INTERNATIONAL SEARCH REPORT

International application No. **PCT/JP2023/011304**

**A. CLASSIFICATION OF SUBJECT MATTER**

***G02B 5/30***(2006.01)i; ***B32B 7/023***(2019.01)i; ***B42D 25/364***(2014.01)i
FI: G02B5/30; B42D25/364; B32B7/023

According to International Patent Classification (IPC) or to both national classification and IPC

**B. FIELDS SEARCHED**

Minimum documentation searched (classification system followed by classification symbols)

G02B5/30; B32B7/023; B42D25/364

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | WO 2020/004155 A1 (ZEON CORP) 02 January 2020 (2020-01-02)<br>paragraphs [0092], [0118], [0120], example 1 | 1-8<br><br>1-8 |
| X<br><br>Y | WO 2021/065484 A1 (ZEON CORP) 08 April 2021 (2021-04-08)<br>paragraph [0057], example 1 | 1-8<br><br>1-8 |
| Y | WO 2021/241226 A1 (ZEON CORP) 02 December 2021 (2021-12-02)<br>paragraph [0086], example 1, fig. 1, 2 | 1-8 |
| Y | JP 2003-207635 A (NHK SPRING CO LTD) 25 July 2003 (2003-07-25)<br>paragraph [0020], fig. 3 | 1-8 |
| A | JP 2018-072388 A (TOPPAN PRINTING CO LTD) 10 May 2018 (2018-05-10)<br>entire text | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2023/011304**

| Patent document cited in search report | Publication date (day/month/year) | Patent family member(s) | Publication date (day/month/year) |
|---|---|---|---|
| WO 2020/004155 A1 | 02 January 2020 | US 2021/0300105 A1<br>paragraphs [0146], [0177], [0180], example 1<br>EP 3816683 A1<br>CN 112368613 A<br>TW 202001226 A | |
| WO 2021/065484 A1 | 08 April 2021 | US 2022/0357585 A1<br>paragraph [0110], example 1<br>EP 4040201 A1<br>CN 114402239 A | |
| WO 2021/241226 A1 | 02 December 2021 | (Family: none) | |
| JP 2003-207635 A | 25 July 2003 | (Family: none) | |
| JP 2018-072388 A | 10 May 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2020004155 A
- US 2021300105
- JP 2005289881 A
- JP 2004115414 A
- JP 2003066214 A
- JP 2003313187 A
- JP 2003342219 A
- JP 2000290315 A
- JP 6072962 A
- US 6468444 B
- WO 9800428 A
- JP 2007176870 A
- JP 6142714 B
- US 2014077267 A
- WO 2019151079 A
- WO 2014077267 A